# EUROPEAN PATENT APPLICATION

(11) **EP 3 942 969 A1**
(43) Date of publication of application: **26.01.2022**
(21) Application number: 20780076.4
(22) Date of filing: 16.03.2020
(51) Int. Cl.: A47F 7/00, G06Q 30/02, G06Q 30/06

(54) **CIGARETTE MERCHANDISE MANAGEMENT SYSTEM AND CIGARETTE MERCHANDISE MANAGEMENT METHOD**

(30) Priority: 22.03.2019 JP 2019055660
(71) Applicant: Japan Tobacco Inc., Tokyo 105-6927 (JP)
(72) Inventor: OJIMA, Atsushi, Tokyo 105-8422 (JP)
(74) Representative: Hoffmann Eitle
(86) International application number: PCT/JP2020/011470
(87) International publication number: WO 2020/196032

(57) **Abstract**

This tobacco product management system comprises: a means for displaying, on a display unit of an order terminal, first tobacco-product-related information in addition to a brand operation display which enables an order operation or a designation operation for designating the brand of tobacco product to be picked up from among tobacco products of a plurality of brands; a means for acquiring a customer identifier for a customer; and a means for, when a specified operation is received by the order terminal displaying the first tobacco-product-related information, carrying out processing such that a customer mobile terminal corresponding to the acquired customer identifier can acquire second tobacco-product-related information.

## Description

### Technical Field

The present invention relates to a technique for managing tobacco products.

### Background Art

In stores such as convenience stores, tobacco products of various brands are displayed by brand on so-called tobacco fixtures such that at the time of purchase of a tobacco product, a salesperson picks up a tobacco product of a brand specified by a customer from a tobacco fixture. Tobacco products are typically delivered to stores in form of cartons and sold in cartons or individual packs into which cartons are unpacked.

PTL 1 below describes a product taking out device that automatically dispenses tobacco products of a desired brand. The product taking out device is provided with an operation panel, and the operation panel has a brand selection switch and a quantity input switch, which are operated to automatically dispense a desired number of tobacco products of a desired brand.

As described above, in some cases, at the time of purchase of a tobacco product, a customer or a salesperson operates an order terminal (operation panel) to specify a tobacco product of a desired brand. Such an order terminal may also be used in a device that does not have a function of automatically dispensing tobacco products, such as a device that points to a display location of tobacco products of a specified brand.

### Citation List

### Patent Literature

PTL 1: Japanese Unexamined Patent Application Publication No. 2011-207575

### Summary of Invention

### Technical Problem

The order terminal (operation panel) described above, which allows only a customer who has been verified as an adult to place an order, is capable of presenting advertisements or sales promotion information of tobacco products, and it is thus desirable to provide such advertisements or sales promotion information to customers who order tobacco products using the order terminal.

However, in a store such as a convenience store, an order terminal for tobacco products is typically installed at or near a cash register counter and operated when payment is made for products. If it takes time to use the order terminal, the time taken for a customer to make payment increases, resulting in a queue of customers being formed in front of the cash register counter.

The present invention has been made in view of such circumstances and provides a technique for presenting, to a customer who orders a tobacco product by operating an order terminal installed in a store, information desired by the customer concerning tobacco products.

In this specification, the "tobacco product" does not refer to an individual cigarette for smoking, but refers to an individually wrapped tobacco product pack in which a pack of a plurality of (for example, 20) cigarettes or other tobaccos is wrapped or a tobacco product carton in which a plurality of (for example, ten) individually wrapped tobacco product packs of the same type are collectively wrapped, with the individually wrapped tobacco product pack and the tobacco product carton being a purchase unit. Other types of tobacco can include snuff, pipe tobacco, and other related items such as cartridges used for tobacco called electronic cigarettes, heated tobacco products, and the like.

In this specification, when it is necessary to distinguish between an individually wrapped pack and a carton, an individually wrapped tobacco product pack is referred to as "pack product" and a tobacco product carton is referred to as "carton product".

### Solution to Problem

The present invention provides a tobacco product management system including an order terminal capable of displaying brand information of tobacco products of a plurality of brands and capable of receiving an operation for ordering a brand that a customer wishes to order from among the plurality of brands, and an assistant device that assists in picking up a tobacco product of a brand specified through an order operation received by the order terminal, the tobacco product management system including a display processing means for causing a display unit of the order terminal to present a display of first tobacco-product-related information, in addition to a brand operation display which enables the order operation or a designation operation for designating a brand of a tobacco product to be picked up from among the tobacco products of the plurality of brands; an identifier acquiring means for acquiring a customer identifier for a customer; and an information providing means for, in response to a specified operation being received by the order terminal on which the first tobacco-product-related information is being displayed, performing processing to enable a customer mobile terminal corresponding to the acquired customer identifier to acquire second tobacco-product-related information, wherein the second tobacco-product-related information is information that is the same as or related to the first tobacco-product-related information or is related to a tobacco product of the brand specified through the order operation received by the order terminal.

In another aspect, the present invention provides a tobacco product management method performed by a system, the system including an order terminal capable of displaying brand information of tobacco products of a plurality of brands and capable of receiving an operation for ordering a brand that a customer wishes to order from among the plurality of brands, and an assistant device that assists in picking up a tobacco product of a brand specified through an order operation received by the order terminal, the tobacco product management method including causing a display unit of the order terminal to present a display of first tobacco-product-related information, in addition to a brand operation display which enables the order operation or a designation operation for designating a brand of a tobacco product to be picked up from among the tobacco products of the plurality of brands; acquiring a customer identifier for a customer; and performing, in response to a specified operation being received by the order terminal on which the first tobacco-product-related information is being displayed, an information providing process to enable a customer mobile terminal corresponding to the acquired customer identifier to acquire second tobacco-product-related information, wherein the second tobacco-product-related information is information that is the same as or related to the first tobacco-product-related information or is related to a tobacco product of the brand specified through the order operation received by the order terminal.

In another aspect, the present invention provides a program for causing one or more computers to execute the tobacco product management method described above, or a storage medium readable by one or more computers and having such a program recorded thereon.

### Advantageous Effects of Invention

According to the present invention, it is possible to provide a technique for presenting, to a customer who orders a tobacco product by operating an order terminal installed in a store, information desired by the customer concerning tobacco products.

### Brief Description of Drawings

Fig. 1 is a schematic diagram illustrating a configuration of a tobacco product management system according to this embodiment;
Fig. 2 is a diagram illustrating an example installation of the tobacco product management system according to this embodiment;
Fig. 3 is a perspective view of a pack fixture;
Fig. 4 is a perspective view of a magazine included in the pack fixture;
Fig. 5 is a schematic diagram illustrating a hardware configuration of an assistant PC and an order terminal;
Fig. 6 is a block diagram illustrating an example processing configuration of the assistant PC, the order terminal, a first control unit, and a second control unit;
Fig. 7 is a diagram illustrating an example of a pick-up notification display;
Fig. 8 is a diagram illustrating an example customer information table;
Fig. 9(a) is a diagram illustrating an example brand master table, and Fig. 9(b) is a diagram illustrating an example store-specific brand information table;
Fig. 10 is a diagram illustrating an example brand selection screen;
Fig. 11 is a diagram illustrating an example brand order screen;
Fig. 12 is a diagram illustrating an example campaign summary screen;
Fig. 13 is a diagram illustrating an example giveaway summary screen;
Fig. 14 is a diagram illustrating an example questionnaire screen;
Fig. 15 is a diagram illustrating an example campaign information screen displayed on a customer mobile terminal;
Fig. 16 is a diagram illustrating an example giveaway information screen displayed on the customer mobile terminal;
Fig. 17 is a sequence chart illustrating an example operation related to ordering and picking up of a tobacco product in the tobacco product management system according to this embodiment;
Fig. 18 is a sequence chart illustrating an example operation related to display of tobacco-product-related information after a tobacco product is ordered in the tobacco product management system according to this embodiment;
Fig. 19 is a diagram illustrating a first modification of the brand order screen; and
Fig. 20 is a diagram illustrating a second modification of the brand order screen.

### Description of Embodiments

An embodiment of the present invention will be described hereinafter with reference to the drawings. The following embodiment is illustrative, and the present invention is not limited to the configuration of the following embodiment.

### [Overview]

Prior to the description of the details of a tobacco product management system according to this embodiment (hereinafter referred to sometimes as the subject system), a description will be given of an overview of the features of the subject system.

The subject system mainly includes an order terminal and an assistant device.

In this embodiment, an example is given in which both tobacco products, namely, a pack product and a carton product, are handled. However, only a pack product may be handled, or only a carton product may be handled.

The order terminal is formed to be capable of displaying brand information of tobacco products of a plurality of brands and capable of receiving an operation for ordering a brand that a customer wishes to order from among the plurality of brands.

The order terminal is a so-called computer operable by a customer or a salesperson and may be a stationary computer such as an order terminal 20 described below, a portable computer such as a tablet, or a wearable computer.

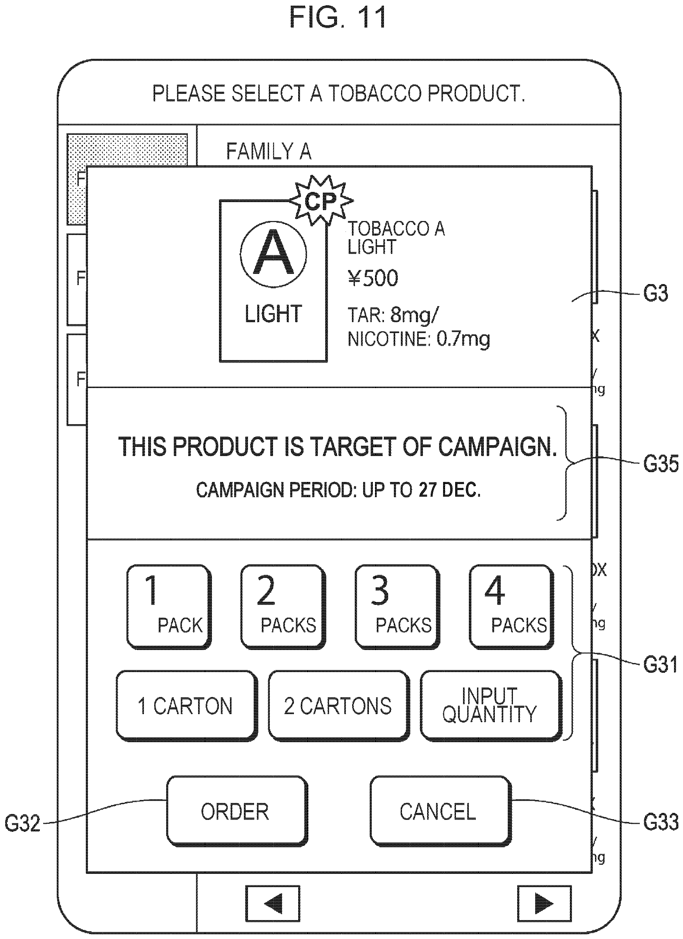

As used herein, the "operation for ordering a brand that a customer wishes to order", which can be received by the order terminal, is an operation indicating the intention of a customer to place an order, and the specific content of the operation is not limited in any way. This order operation may be, for example, an operation of pressing an order confirmation operation section G32 (see Fig. 11) of a brand order screen G3 described below or an operation for confirming a placed order on a confirmation screen displayed after the order confirmation operation section G32 is pressed. In a case where a voice operation or a gesture operation is enabled, the order operation may be a voice operation or a gesture operation corresponding to the placement of an order or the confirmation of an order.

In this specification, the "brand" of a tobacco product is information that can identify each individual type of tobacco product and is represented as a product name of a tobacco product. Specifically, the brand name of a tobacco product is denoted by a brand group name alone or a brand group name with an indication of the amount of tar, the package form, and so on. Examples of the brand group name include a representative name of the brand, such as "MEVIUS (registered trademark)" and "SEVEN STARS (registered trademark)". For convenience of description, for example, if the brand group name is "Tobacco A", brands of tobacco products have brand names, such as "Tobacco A", "Tobacco A Box", "Tobacco A 10 mg", "Tobacco A 100's Box", "Tobacco A Light", "Tobacco A 7 mg", and "Tobacco A Light Box".

The assistant device is communicably connected to the order terminal and is configured to assist in picking up a tobacco product of a brand specified through an order operation received by the order terminal. The type of communication between the assistant device and the order terminal may be either wired communication or wireless communication and is not limited to any specific type of communication.

The assistant device is an information processing device including at least one or more processors (information processing circuits (units)) such as a CPU (Central Processing Unit), an MCU (Micro Controller Unit), an MPU (Micro Processing Unit), and a DSP (Digital Signal Processor). The assistant device may be one or a plurality of so-called general-purpose computers, a dedicated computer (embedded microcomputer) constituted by one or a plurality of printed circuit boards, called an embedded system or the like, or a combination thereof.

The assistant device may be associated only with an assistant PC 10 described below or may be associated with the assistant PC 10 and either a first control unit 30 or a second control unit 40, or both, described below. That is, the assistant device is not limited to a single device.

The assistant device may assist a device in picking up a tobacco product, the device being a device having a function of automatically dispensing a tobacco product, such as the product taking out device described above, a tobacco fixture that does not have a function of automatically dispensing a tobacco product and on which tobacco products are displayed so that an operator can manually pick up a tobacco product, or both of them.

When assisting the former device, the assistant device can assist the device by, for example, transmitting to the device a dispensing instruction including an identifier of a brand of a tobacco product to be dispensed. When assisting the latter tobacco fixture, the assistant device can assist the tobacco fixture by, for example, presenting to the salesperson a location of the tobacco fixture where tobacco products of a brand to be dispensed are accommodated. In this embodiment, a projection image produced by a projector 56 is used to notify the salesperson of a location of a magazine 513 in a pack fixture 50, and carton location notification LEDs 62 are used to notify the salesperson of an accommodation area in a carton fixture 60 to present to the salesperson a location from which a tobacco product of a target brand is picked up or a location to be replenished with a tobacco product of a target brand. The assistance may also be performed by causing a display device to display an image of the external appearance of the front portion of a tobacco fixture to notify the salesperson of an accommodation location of tobacco products of a target brand. The specific content of assistance performed by the assistant device is not limited in any way if it is possible to provide assistance in picking up a tobacco product of a brand specified through an order operation performed on the order terminal.

The subject system includes at least a display processing means, an identifier acquiring means, and an information providing means. These means are each embodied by one or more processors executing a computer program stored in a memory in either the order terminal or the assistant device, or both. That is, each of the means may be disposed on the order terminal or the assistant device, or both.

The display processing means causes a display unit of the order terminal to present a display of first tobacco-product-related information, in addition to a brand operation display which enables the order operation described above or a designation operation for designating a brand of a tobacco product to be picked up from among tobacco products of a plurality of brands.

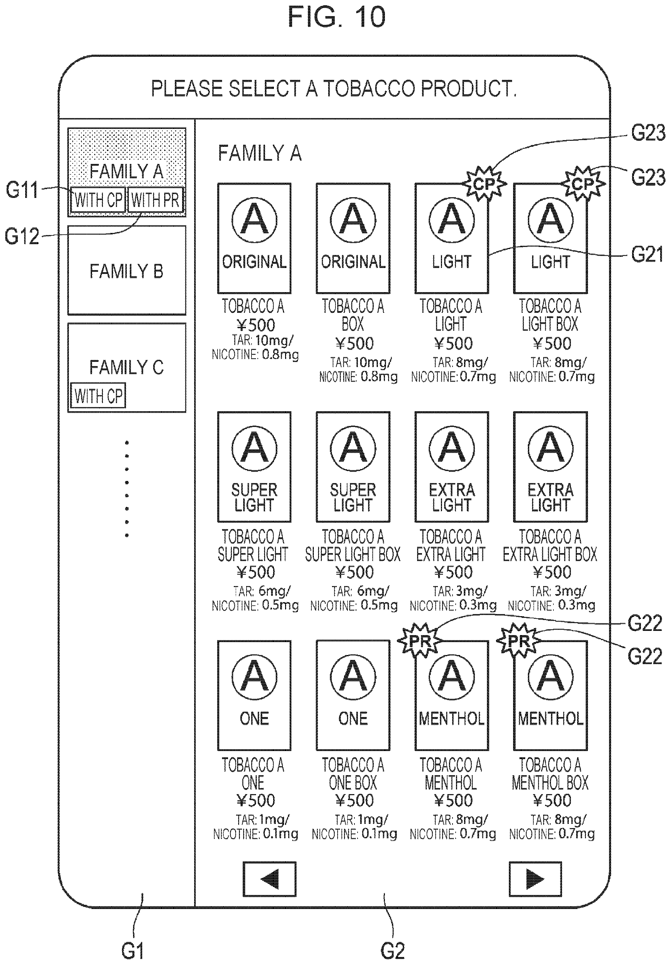

As used herein, the "brand operation display" refers to a display that enables the order operation described above or a designation operation for designating a tobacco product of a certain brand by a customer or a salesperson, and the specific content of the display is not limited in any way. As a specific example of the "brand operation display", in this embodiment, a brand selection screen (see Fig. 10) or a brand order screen G3 (see Fig. 11) is exemplified.

Further, the "designation operation for designating a brand of a tobacco product" refers to an operation for designating a certain brand of tobacco products, regardless of whether a customer is intended to place an order, and the specific content of the operation is not limited in any way. The designation operation may be, for example, an operation of selecting a certain brand on a touch panel of the order terminal by a customer or a salesperson, an operation of holding a tobacco product of a certain brand over a barcode reader of the order terminal, or an operation of reading the name of a certain brand aloud through a microphone of the order terminal by a customer or a salesperson. Additionally, the designation operation may be an operation of registering certain brand information to a terminal such as a smartphone carried by a customer (hereinafter referred to as a customer mobile terminal or a mobile terminal) and holding the customer mobile terminal over a short-range wireless communication antenna of the order terminal.

The "tobacco-product-related information" refers to information related to a tobacco product, and the specific content thereof is not limited. The "tobacco-product-related information" may be information related to a tobacco product of a brand specified through an order operation received by the order terminal, or information on a brand different from the brand of an ordered tobacco product.

Examples of the "tobacco-product-related information" include detailed information (such as brand history information like background of development, manufacturing information, material information, and smoke taste information) related to tobacco products of a certain brand, giveaway information or campaign information attached to tobacco products of a certain brand, and questionnaire information concerning tobacco products or smoking. The details of the giveaway information, the campaign information, and the questionnaire information will be described below.

Alternatively, announcement information concerning a schedule of changing a packaging (package) or a brand name (such as the change time or the content) may be displayed as the "tobacco-product-related information", or announcement information concerning a discontinuation schedule of a brand (such as the time of discontinuation or an alternative brand) may be displayed as the "tobacco-product-related information". Alternatively, information concerning a recommended brand or a newly released brand may be displayed as the "tobacco-product-related information". Alternatively, a guide for registration of a customer identifier described below or a guide for downloading a dedicated application that operates on a customer mobile terminal possessed by a customer may be displayed as the "tobacco-product-related information".

The identifier acquiring means acquires a customer identifier for a customer.

The customer identifier is an identifier capable of identifying a customer in the subject system and may be, for example, an identifier specific to the subject system, an identifier that can be a communication address, like an email address or information assigned to a customer mobile terminal possessed by a customer, an identifier that can identify a customer in any other service, like an SNS (Social Network Service) account, or an identifier that can identify biometrics of a customer obtained from biometric information (vein, fingerprint, face shape, iris, etc.) of the customer.

The method for acquiring a customer identifier by the identifier acquiring means is not also limited. The identifier acquiring means may hold correspondence information between a customer identifier and biometric information of a customer, extract biometric information from a captured biometric image of a customer, and identify a customer identifier from the biometric information. Alternatively, the identifier acquiring means may acquire a customer identifier from a display screen of a customer mobile terminal that displays a barcode, a two-dimensional code, or the like in which the customer identifier is encoded, or directly acquire a customer identifier from the customer mobile terminal via communication.

In response to a specified operation being received by the order terminal on which the first tobacco-product-related information described above is being displayed, the information providing means performs processing to enable a customer mobile terminal corresponding to the customer identifier acquired by the identifier acquiring means to acquire second tobacco-product-related information.

As used herein, the "specified operation" refers to a predetermined operation performed on the order terminal on which the first tobacco-product-related information is being displayed, and the specific content of the operation is not limited. The "specified operation" may be, for example, an operation for designating a tobacco product of a certain brand or an operation for ordering a tobacco product of a certain brand, a specified operation performed on the display unit of the order terminal, such as a flick operation, or an operation of selecting a "view with smartphone" button or a "do with smartphone" button displayed on the order terminal in an example described below.

The term "customer mobile terminal corresponding to a customer identifier" refers to a customer mobile terminal possessed by a customer identified by the customer identifier or a customer mobile terminal identified by the customer identifier.

The specific content of processing performed by the information providing means is not limited in any way if the customer mobile terminal corresponding to the customer identifier acquired by the identifier acquiring means can acquire second tobacco-product-related information. For example, the information providing means itself may transmit second tobacco-product-related information to the customer mobile terminal, or the information providing means may instruct any other device to transmit second tobacco-product-related information. In the former case, the information providing means can transmit the second tobacco-product-related information to a customer mobile terminal paired therewith using short-range wireless communication or the like and identified by the customer identifier.

Alternatively, the information providing means may cause the order terminal to display information capable of accessing second tobacco-product-related information like a URL (Uniform Resource Locator) or a two-dimensional code in which the URL is encoded, or may transmit the information to the customer mobile terminal.

If the customer identifier has not been acquired and the customer mobile terminal fails to acquire second tobacco-product-related information, the display processing means may not execute processing to enable the customer mobile terminal to acquire second tobacco-product-related information, or the order terminal may be prevented from receiving the specified operation.

The second tobacco-product-related information may be the same information as the first tobacco-product-related information or may be different information from the first tobacco-product-related information. In the latter case, the second tobacco-product-related information may be information related to the first tobacco-product-related information, or may be information unrelated to the first tobacco-product-related information and related to a tobacco product of a brand specified through an order operation received by the order terminal.

In an example described below, a summary of campaign information or giveaway information attached to a tobacco product of an ordered brand for which an order operation is received by the order terminal 20 corresponds to the first tobacco-product-related information, and details of the campaign information or the giveaway information corresponds to the second tobacco-product-related information. In addition, questionnaire information described below is an example in which the first tobacco-product-related information and the second tobacco-product-related information are the same.

However, a combination of the first tobacco-product-related information and the second tobacco-product-related information is not limited to an example in this embodiment. The first tobacco-product-related information may only indicate whether a tobacco product of the ordered brand is the target of a campaign or giveaway, and the second tobacco-product-related information may be detailed information of the target campaign or giveaway, or both the first tobacco-product-related information and the second tobacco-product-related information may be detailed information of the campaign or giveaway.

In this embodiment, as described above, when, in addition to a brand operation display which enables an order operation or a designation operation for designating a brand of a tobacco product to be picked up or dispensed, a display of the first tobacco-product-related information is presented on the order terminal, a customer identifier for a customer is acquired, and a specified operation is received by the order terminal on which the first tobacco-product-related information is being displayed, processing is performed to enable a customer mobile terminal corresponding to the acquired customer identifier to acquire the second tobacco-product-related information.

This allows the customer to view the first tobacco-product-related information by using the order terminal, which receives an order for a tobacco product, and to view the second tobacco-product-related information by using their own mobile terminal by performing a specified operation. Consequently, it is possible to present, to a customer who orders a tobacco product by operating an order terminal installed in a store, tobacco-product-related information desired by the customer. Additionally, the customer can perform, when many customers are in the store, a specified operation using the order terminal and, after payment or the like, slowly view the second tobacco product information using the mobile terminal of the customer so as not to bother other customers waiting for payment.

### [Tobacco Product Management System]

A tobacco product management system (the subject system) 1 according to this embodiment having the features described above will now be described in detail.

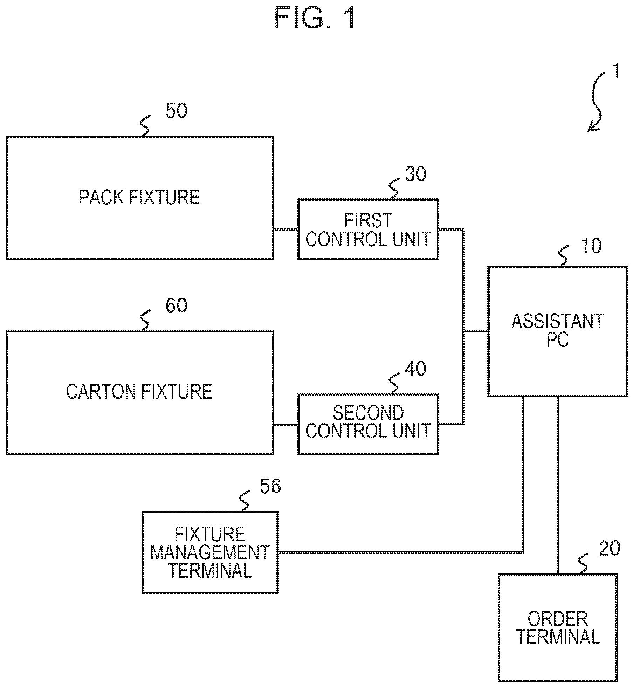

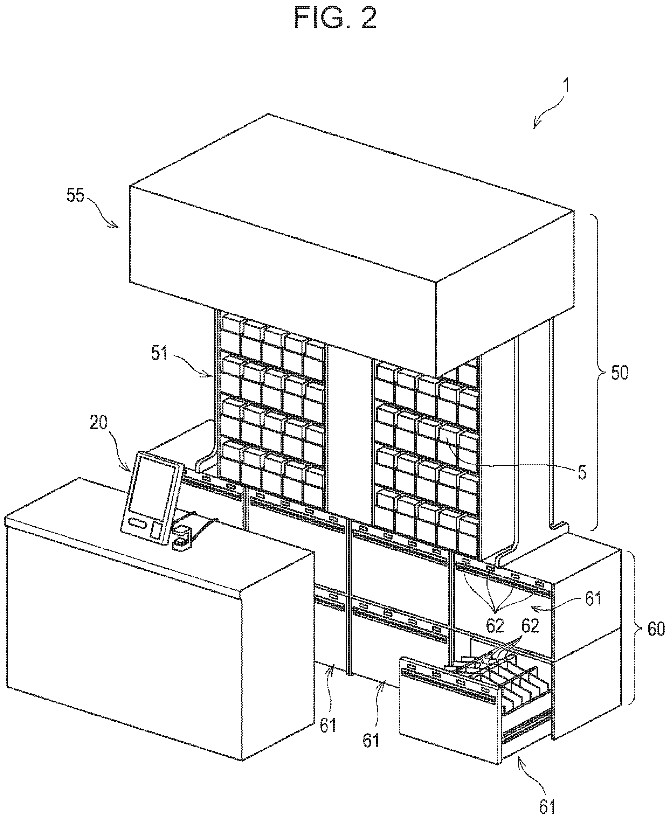

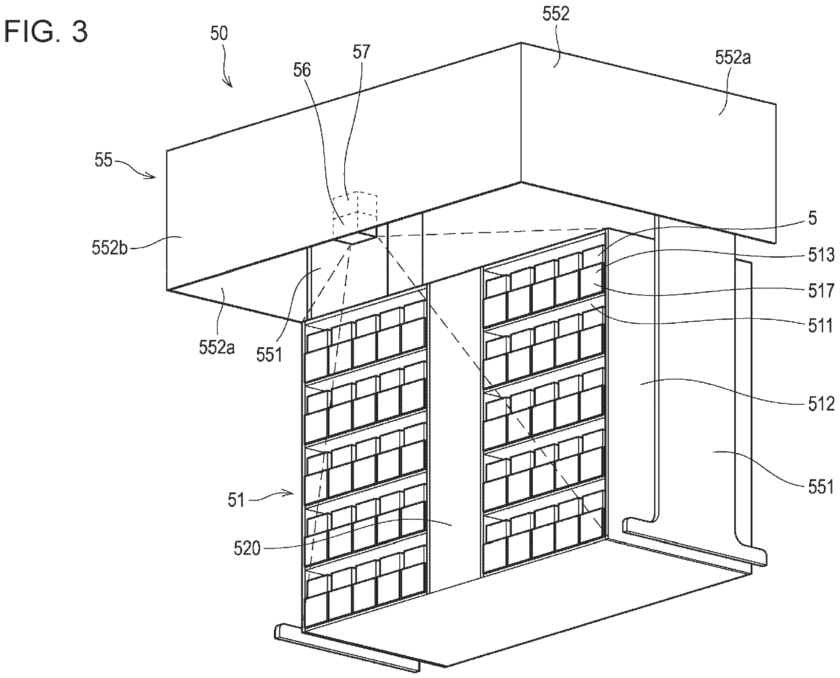

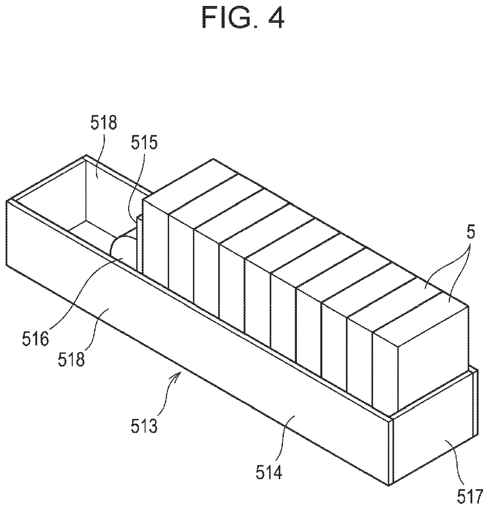

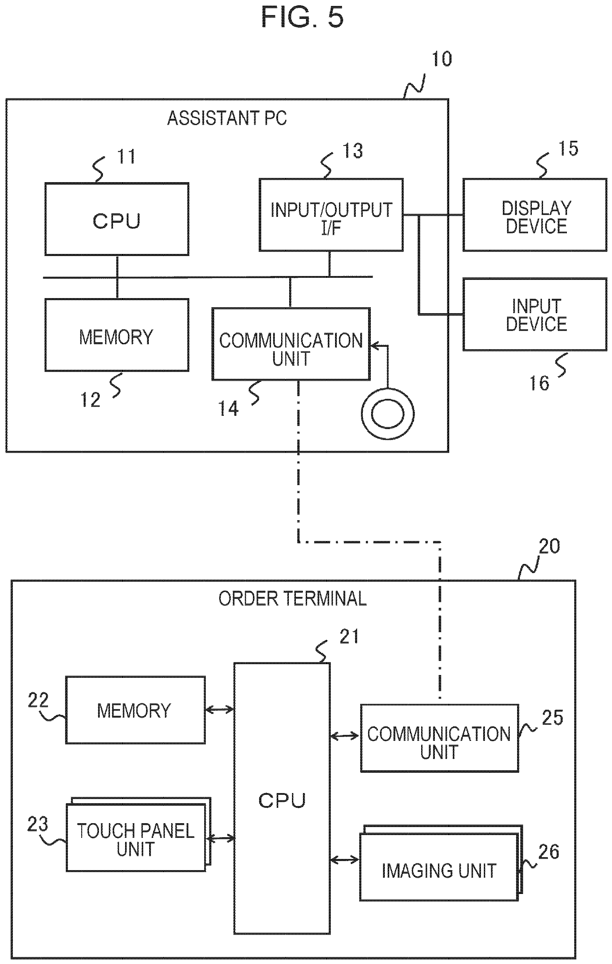

Fig. 1 is a schematic diagram illustrating a configuration of the tobacco product management system 1 according to this embodiment. Fig. 2 is a diagram illustrating an example installation of the tobacco product management system 1 according to this embodiment. Fig. 3 is a perspective view of the pack fixture 50. Fig. 4 is a perspective view of a magazine 513 included in the pack fixture 50. Fig. 5 is a schematic diagram illustrating a hardware configuration of the assistant PC 10 and the order terminal 20.

As illustrated in Fig. 2, the subject system 1 is installed in a store such as a convenience store. In the following, the store in which the subject system 1 is installed is sometimes referred to as the subject store.

As illustrated in Fig. 1, the subject system 1 is constituted by the assistant PC (Personal Computer) 10, the order terminal 20, the first control unit 30, the second control unit 40, the pack fixture 50, the carton fixture 60, a fixture management terminal 70, and so on.

The assistant PC 10 is a so-called computer. As illustrated in Fig. 5, the assistant PC 10 includes a CPU 11, a memory 12, an input/output interface (I/F) 13, a communication unit 14, and so on. The CPU 11 is connected to other individual units via a communication line such as a bus.

The CPU 11 includes, in addition to a typical CPU, an MCU, an MPU, an application-specific integrated circuit (ASIC), a DSP (Digital Signal Processor), a GPU (Graphics Processing Unit), and so on.

The memory 12 is a RAM (Random Access Memory), a ROM (Read Only Memory), or an auxiliary storage device (such as a hard disk).

The input/output I/F 13 can be connected to user interface devices such as a display device 15 and an input device 16. The display device 15 is a device that displays a screen corresponding to rendering data processed by the CPU 11 or the like, such as an LCD (Liquid Crystal Display) or a CRT (Cathode Ray Tube) display. The input device 16 is a device that receives input of a user operation, such as a keyboard or a mouse. The display device 15 and the input device 16 may be an integrated touch panel or may not be connected to each other.

The communication unit 14 performs wired communication or wireless communication with any other computer, exchange of signals with any other device, and the like. In this embodiment, the communication unit 14 communicates with the first control unit 30, the second control unit 40, the order terminal 20, and a server device (not illustrated). The communication method performed by the communication unit 14 is not limited in any way. The communication unit 14 may also be connected to a transportable recording medium or the like.

As illustrated in Fig. 2, the order terminal 20 is a stationary computer installed on a cash register counter in the subject store so as to be operable by a customer and a salesperson. However, the order terminal 20 may be installed in a location other than the cash register counter.

As illustrated in Fig. 5, the order terminal 20 includes a CPU 21, a memory 22, a touch panel unit 23, a communication unit 25, an imaging unit 26, and so on. The CPU 21 is connected to other individual units via a communication line such as a bus.

The touch panel unit 23 includes a display unit and a touch sensor. The display unit includes a monitor and performs display processing. The touch sensor senses an external touch or a close proximity state. In this embodiment, two touch panel units 23 are disposed back to back, one being disposed to face the customer, the other being disposed to face the salesperson. The two touch panel units 23 have respective display panels, on which the same display is output. This allows the salesperson to check a touch panel operation performed by the customer and allows the customer to check a touch panel operation performed by the salesperson. In addition, the customer and the salesperson can cooperate with each other to perform a series of operations for ordering a tobacco product by using the touch panels.

The imaging unit 26 is a unit that captures an image. In this embodiment, the imaging unit 26 includes a barcode scanner capable of reading a barcode, a two-dimensional barcode (such as QR code (registered trademark)), and the like, and a vein imaging unit for vein authentication. The barcode scanner is capable of reading a barcode or QR code (registered trademark) placed on a package of a tobacco product or displayed on a mobile terminal of a customer. The vein imaging unit is capable of capturing a vein image from a person's finger or palm. A specific imaging method of the imaging unit 26 is not limited in any way.

The communication unit 25 performs wired communication or wireless communication with any other computer, exchange of signals with any other device, and the like. In this embodiment, the communication unit 25 performs short-range wireless communication with a mobile terminal of a customer and also performs wired communication or wireless communication with the order terminal 20. The communication method performed by the communication unit 25 is not limited in any way.

The CPU 21 and the memory 22 are similar to the CPU 11 and the memory 12 described above, respectively.

The hardware configuration illustrated in Fig. 5 is an example, and the hardware configuration of the assistant PC 10 and the order terminal 20 is not limited to that in the example illustrated in Fig. 5. The assistant PC 10 and the order terminal 20 can include other hardware elements (not illustrated), and the number of hardware elements included is not limited to that in the example in Fig. 5. For example, the assistant PC 10 or the order terminal 20 may include a plurality of CPUs.

The first control unit 30 is a control board that controls the pack fixture 50, and the second control unit 40 is a control board that controls the carton fixture 60. Specifically, the first control unit 30 and the second control unit 40 are embedded systems each including a CPU, a memory, a communication unit, an input/output interface, and so on, and control the pack fixture 50 and the carton fixture 60, respectively, in response to the corresponding CPUs executing control programs stored in the corresponding memories. The details of the control of the pack fixture 50 by the first control unit 30 and the details of the control of the carton fixture 60 by the second control unit 40 will be described below.

The first control unit 30 is connected to the components of the pack fixture 50 via a communication unit or an input/output interface and exchanges signals with the individual components. The second control unit 40 is connected to the components of the carton fixture 60 via a communication unit or an input/output interface and exchanges signals with the individual components.

The first control unit 30 and the second control unit 40 are communicably connected to the assistant PC 10 via a communication unit and exchange signals with the assistant PC 10.

The fixture management terminal 70 is a portable, so-called computer and has a hardware configuration similar to that of the order terminal 20. Although not illustrated in Fig. 2, the fixture management terminal 70 is installed near the pack fixture 50. For example, the fixture management terminal 70 is installed in a side surface portion of the pack fixture 50.

The fixture management terminal 70 includes a touch panel, and the touch panel displays a fixture management menu that enables management of the pack fixture 50 or the carton fixture 60. The fixture management terminal 70 is communicably connected to the assistant PC 10 via a communication unit and sends information corresponding to the content of an operation performed on the fixture management menu to the assistant PC 10.

A barcode scanner may be connected to the fixture management terminal 70. In this case, a barcode placed on a package of a pack product or a carton product to be replenished is read by the barcode scanner, and the read information is sent from the fixture management terminal 70 to the assistant PC 10.

In the example in Fig. 2, the pack fixture 50 and the carton fixture 60 are stacked one on top of the other and installed behind the cash register counter (back-counter side) in the subject store. However, the positional relationship and the installation locations of the pack fixture 50 and the carton fixture 60 are not limited to those in the example in Fig. 2. For example, the pack fixture 50 may be installed on top of the back counter, and the carton fixture 60 may be installed beneath the back counter.

In the following description, for clarity, a description will be given of a single pack fixture 50 and a single carton fixture 60. However, two pack fixtures 50 and two carton fixtures 60 may be used. Specifically, the two carton fixtures 60 may be arranged side-by-side horizontally, and the two pack fixtures 50 may be arranged side-by-side in such a manner that each of the pack fixtures 50 is placed on top of a corresponding one of the carton fixtures 60. The number of pack fixtures 50 and the number of carton fixtures 60 to be installed in the subject store are not limited.

The pack fixture 50 includes a magazine fixture 51 and a projection unit 55.

The magazine fixture 51 includes a magazine storage rack 512 having a plurality of shelves 511, a plurality of magazines 513 mounted on the shelves 511, a display screen 520 arranged in a center portion of a front surface portion of the magazine fixture 51 in a lateral width direction thereof, and so on.

While the number of magazines 513 mounted in the magazine storage rack 512 is not limited, in this embodiment, for example, the magazine storage rack 512 includes five shelves 511 on each of the left and right sides of the display screen 520, and five magazines 513 are mounted on each of the shelves 511.

As illustrated in Fig. 4, each of the magazines 513 includes a mounting portion 514 in which a plurality of pack products 5 are mounted in such a manner as to be aligned in a row from front to rear, a slider 515 disposed to be movable in the front-rear direction along the mounting portion 514, an urging portion 516 that urges the slider 515 forward, and so on.

The mounting portion 514 is configured to have, for example, a front wall 517, a pair of left and right sidewalls 518, a bottom plate portion, and a rear wall. The front wall 517 may be fixed to the front end portions of the sidewalls 518 and the bottom plate portion, or may be held by the front end portions of the pair of sidewalls 518 in such a manner as to be able to lean forward.

The slider 515 urges the pack products 5, which are mounted in the mounting portion 514, forward. As the remaining number of pack products 5 in the mounting portion 514 decreases, the slider 515 moves forward.

The urging portion 516 is mounted in the slider 515. The urging portion 516 may be, for example, a spirally wound leaf spring or a wire reel.

The projection unit 55 includes a pair of left and right pillar portions 551, a support portion 552 supported by the pillar portions 551, and so on.

For example, one of the pillar portions 551 is arranged along the left sidewall portion of the magazine fixture 51, and the other pillar portion 551 is arranged along the right sidewall portion of the magazine fixture 51. The support portion 552 has, for example, a pair of left and right sidewall portions 552a, and a front wall portion 552b connecting the front ends of the sidewall portions 552a to each other. The left and right sidewall portions 552a are supported by the left and right pillar portions 551, respectively. The front wall portion 552b is arranged toward the front relative to the front surface of the magazine fixture 51 and is arranged above the magazine fixture 51.

The projection unit 55 further includes the projector 56, a camera 57, and the first control unit 30 (not illustrated in Fig. 3). As illustrated in Fig. 3, the projector 56 and the camera 57 are disposed on the back surface side of the front wall portion 552b of the support portion 552, for example.

The projector 56 projects an image onto a projection range including the front walls 517 of the plurality of magazines 513 and the display screen 520 to perform display across the range. The number of light sources of the projector 56 is not limited, and may be one. Preferably, the projector 56 has a plurality of light sources.

In this embodiment, the projector 56 projects an image onto the projection range described above to perform pick-up notification display or replenishment notification display on the front walls 517 of the magazines 513 or the display screen 520. For example, the pick-up notification display is performed by projecting an image such that the front wall 517 of a magazine 513 that accommodates a pack product 5 to be picked up within the projection range is presented in a specific color (for example, red) and the other regions are presented in white to notify the operator (salesperson) of the location of the magazine 513 that accommodates the pack product 5 to be picked up. The replenishment notification display is performed by performing display on the front wall 517 of the target magazine 513 in a similar way to notify the operator (salesperson) of the location of the magazine 513 to be replenished with the target pack product 5.

In this specification, the "replenishment" of a tobacco product is used to indicate that a magazine 513 of the pack fixture 50 or an accommodation area of a drawer rack 61 of the carton fixture 60, from which a tobacco product has been removed, is supplied with a tobacco product of the same brand, and also indicate that the magazine 513 or the accommodation area of the drawer rack 61 is supplied with a new tobacco product disclosed to be newly dealt in.

The camera 57 continuously captures images of the front walls 517 of the plurality of magazines 513 and outputs image-capturing results to the first control unit 30. Although details will be described below, an operation performed by the operator, such as an operation of picking up a pack product 5 from a magazine 513 or an operation of replenishing a magazine 513 with a pack product 5, is subjected to image recognition using such images sent from the camera 57. Accordingly, it is possible to detect, for example, an incorrect pick-up operation, such as picking up a pack product 5 not to be picked up, or an incorrect replenishment operation, such as replenishing a different magazine 513 from a magazine 513 to be replenished, with a pack product 5.

The carton fixture 60 includes a rectangular parallelepiped cabinet and a plurality of drawer racks 61 held in the cabinet. In the example in Fig. 2, eight drawer racks 61 are illustrated. However, the number of drawer racks 61 included in the carton fixture 60 is not limited to that in the example in Fig. 2.

Each of the drawer racks 61 includes a tray-like rack body that supports a plurality of carton products with a bottom plate thereof, and a front wall portion that is disposed at the front end of the rack body in a vertically upright state to allow the operator to pull the drawer rack 61 from the cabinet and slide the drawer rack 61 into the cabinet. In a state where the drawer racks 61 are in the cabinet, the front wall portions thereof are substantially flush with the front end portion of the cabinet and the front surface portion of the pack fixture 50.

The rack body of each of the drawer racks 61 has a plurality of longitudinal partitions and a plurality of lateral partitions. The plurality of longitudinal partitions extend in the front-rear direction and divide the inside of the drawer rack 61 into areas in the left-right direction. The plurality of lateral partitions divide the inside areas separated by the longitudinal partitions into areas in the front-rear direction. In this embodiment, accordingly, the inside area of each of the drawer racks 61 is divided into four areas in the left-right direction and nine areas in the front-rear direction, and 36 accommodation areas in total are formed. Each accommodation area accommodates a single carton product. That is, in this embodiment, each of the drawer racks 61 is capable of accommodating 36 carton products.

Further, each of the drawer racks 61 has carton location notification LEDs 62 disposed on an upper portion of the front wall portion thereof, and the longitudinal partitions of each of the drawer racks 61 has carton location notification LEDs 62 disposed thereon to notify the operator of the positions of the accommodation areas of each of the drawer racks 61.

The carton location notification LEDs 62 disposed on the front wall portion notify the operator of each of the drawer racks 61 having accommodation areas formed therein and also of the positions of the accommodation areas in the drawer rack 61 in the left-right direction, which are separated by the longitudinal partitions. The carton location notification LEDs 62 disposed on the longitudinal partitions of each of the drawer racks 61 notify the operator of the positions of the accommodation areas in the drawer rack 61 in the front-rear direction, which are separated by the lateral partitions.

That is, the carton location notification LEDs 62 disposed on the front wall portions notify the operator of each of the drawer racks 61 and the positions of the left-right direction in each of the drawer racks 61, and the carton location notification LEDs 62 disposed on the longitudinal partitions notify the operator of the positions of the front-rear direction in each of the drawer racks 61. This allows the operator to quickly access a target accommodation area.

The carton location notification LEDs 62 are controlled to turn on or off by the second control unit 40.

Each of the drawer racks 61 further includes a detection sensor (not illustrated) that detects a carton product when the carton product is accommodated in an individual accommodation area. The detection sensor can be, for example, a weight sensor disposed on the bottom plate of the rack body. However, the detection sensor may be a sensor of any other type, such as an optical sensor or a capacitance sensor.

The carton fixture 60 further includes locking mechanisms that enable the respective drawer racks 61 to be selectively pulled from the cabinet. In a normal state, the locking mechanisms are in locked state to prevent all the drawer racks 61 from being pulled from the cabinet. Under control of the second control unit 40, the locking mechanisms are selectively set to unlocked state so that only a designated drawer rack 61 can be pulled from the cabinet. Accordingly, the drawer racks 61 and the locking mechanisms therefor in this embodiment can be a stocker access unit that makes at least some of a plurality of product stocker portions (accommodation areas) accessible or inaccessible to the operator.

The locking mechanisms provided for the drawer racks 61 can prevent unauthorized access to the accommodation areas of carton products.

### [Processing Configuration]

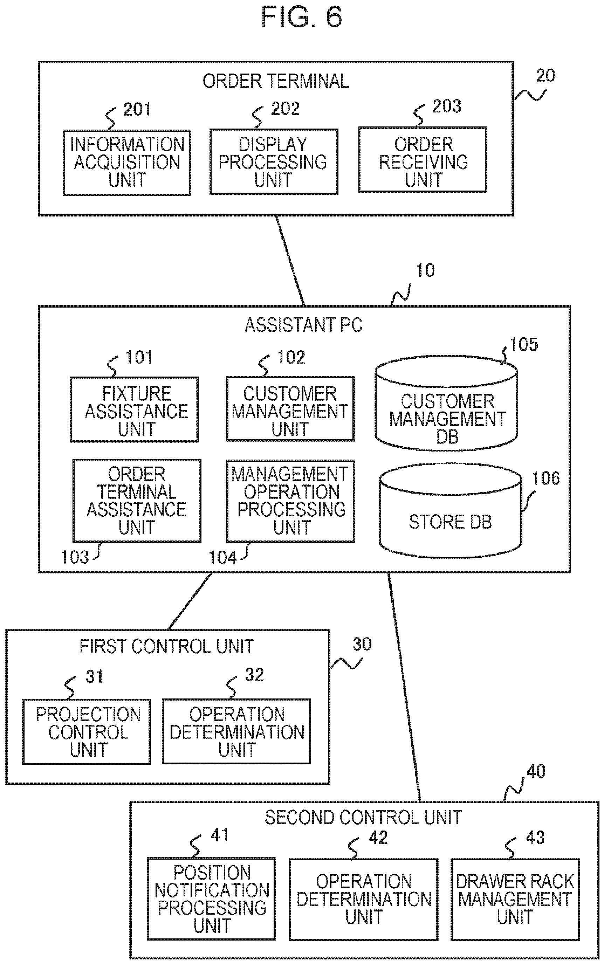

Next, the processing configurations of the assistant PC 10, the order terminal 20, the first control unit 30, and the second control unit 40 will be described with reference to Fig. 6. Fig. 6 is a block diagram illustrating an example processing configuration of the assistant PC 10, the order terminal 20, the first control unit 30, and the second control unit 40.

### [First Control Unit]

The first control unit 30 includes a projection control unit 31, an operation determination unit 32, and so on. These are software elements and are embodied by a CPU executing a control program stored in a memory such as a RAM or a ROM.

The projection control unit 31 controls projection of the projector 56 of the pack fixture 50 in accordance with a projection instruction sent from the assistant PC 10. The projection instruction includes notification designation indicating a pick-up notification display, a replenishment notification display, or a collective pick-up notification display. When the notification designation in the projection instruction indicates a pick-up notification display, the projection instruction further includes position information of a magazine 513 and the number of pack products 5 to be picked up. When the notification designation in the projection instruction indicates a replenishment notification display, the projection instruction includes position information of a magazine 513. When the notification designation in the projection instruction indicates a collective pick-up notification display, the projection instruction further includes position information of a magazine 513.

The projection control unit 31 holds a correspondence relationship between position information of each of the magazines 513 in the magazine fixture 51 and local region information of the display screen 520 and the projection image. Based on the position information of the magazine 513 included in the projection instruction, the projection control unit 31 causes the projector 56 to project a projection image such that a local region corresponding to the position of the magazine 513 is presented in a specific color (for example, red) and other regions are presented in a different color (for example, white). This can notify the operator (salesperson) of the position of the magazine 513 specified for picking up or replenishment.

Further, based on the number of pack products 5 included in the projection instruction, the projection control unit 31 may cause the projector 56 to project a projection image including a specific character string (for example, "Please pick up one tobacco product from the area with red blinking" or "Please replenish the area illuminated in blue with tobacco products") onto the local region corresponding to the position of the target magazine 513 or the local region corresponding to the display screen 520. The projection control unit 31 holds a predetermined character string for each notification designation in a projection instruction (pick-up notification display and replenishment notification display), thus making it possible to generate the specific character string as described above.

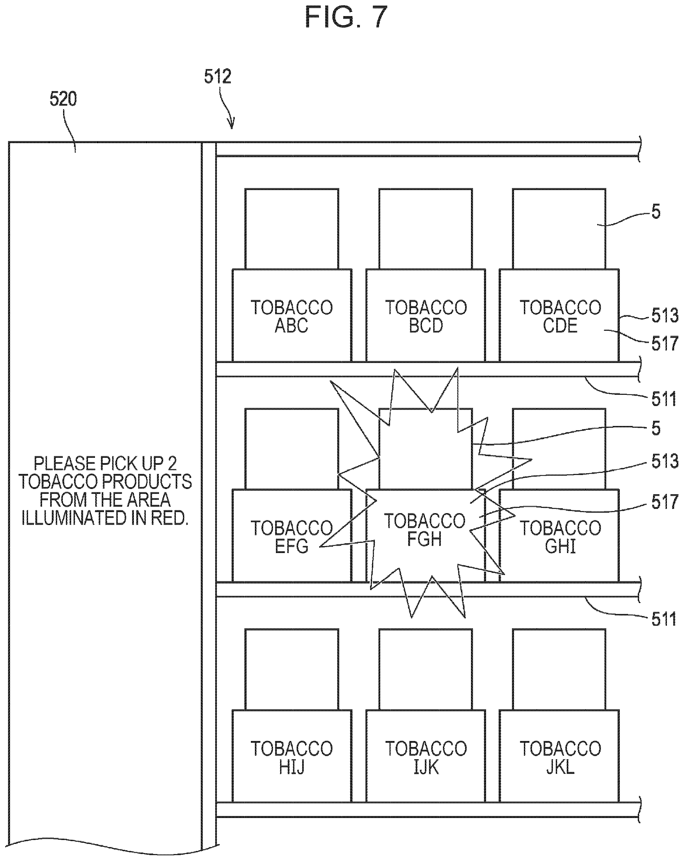

Fig. 7 is a diagram illustrating an example of the pick-up notification display.

As illustrated in Fig. 7, in the pick-up notification display, the position of the notification-target magazine 513 is displayed in a more noticeable way than the positions of the other magazines 513. For example, the position of the notification-target magazine 513 is displayed in red, while the positions of the other magazines 513 are displayed in white. Alternatively, the position of the notification-target magazine 513 may be displayed in a blinking manner.

In this manner, the pick-up notification display makes the front wall 517 of the notification-target magazine 513 more noticeable than surroundings. This allows the operator (salesperson) to easily and quickly recognize the position of the magazine 513 from which a pack product 5 is to be picked up and to quickly pick up the pack product 5 without making any mistake.

As illustrated in Fig. 7, furthermore, the front wall 517 of each of the magazines 513 may provide a normal display to show the brand name or the like of the pack products 5 accommodated in the magazine 513. Information displayed as a normal display may include the brand name, the price, the tar value, the nicotine value, and so on of each pack product 5. Such a normal display may be implemented by a projection image produced by the projector 56, or may be implemented by placing a sheet of paper with the information printed thereon on the front wall 517. When a normal display is implemented by a projection image, in the pick-up notification display, it is desirable that normal display be provided to the surroundings of the notification-target magazine 513 to display the position of the notification-target magazine 513 in a more noticeable way than the surroundings.

In the example in Fig. 7, furthermore, as a pick-up notification display, the display screen 520 displays the specific character string "Please pick up 2 tobacco products from the area illuminated in red". As described above, this specific character string can be generated from predetermined character strings (in Fig. 7, "tobacco products from the area illuminated in red" and "Please pick up") corresponding to the notification designation (in Fig. 7, pick-up notification display) included in the projection instruction and a character string (in Fig. 7, "2") corresponding to the number of pack products 5 included in the projection instruction.

When the notification designation in the projection instruction indicates a collective pick-up notification display, as described above, the projection control unit 31 notifies the operator of the position of the target magazine 513 and causes the projector 56 to project an image that promotes collective picking up of products (for example, the specific character string "Please pick up all the tobacco products from the area illuminated in red") onto the display screen 520.

The operation determination unit 32 receives an image captured by the camera 57 and applies image recognition processing to the image to detect an operation of picking up a pack product 5 from a magazine 513 or an operation of replenishing a magazine 513 with a pack product 5 by the operator. The image recognition processing is not limited, and may be processing using an existing image recognition technique.

Further, the operation determination unit 32 can determine whether the detected pick-up operation is an operation of picking up a pack product 5 from the magazine 513 at the position indicated by the position information included in the projection instruction described above to determine whether the pick-up operation is normal or abnormal. Likewise, the operation determination unit 32 can determine whether the detected replenishment operation is an operation of replenishing the magazine 513 at the position indicated by the position information included in the projection instruction described above with a pack product 5 to determine whether the replenishment operation is normal or abnormal.

For example, the operation determination unit 32 can identify the position of the magazine 513 specified by the detected pick-up operation or replenishment operation from the image and determine whether the identified position of the magazine 513 matches the position indicated by the position information included in the projection instruction to determine whether the pick-up operation or replenishment operation is normal or abnormal.

Further, the operation determination unit 32 can identify the number of pack products 5 picked up in the pick-up operation through image recognition. In this case, the operation determination unit 32 can determine whether the identified number of pack products 5 matches the quantity included in the projection instruction to determine whether the pick-up operation is normal or abnormal. Likewise, the operation determination unit 32 can identify the number of pack products 5 replenished in the replenishment operation through image recognition.

However, the first control unit 30 may acquire the number of actually picked up pack products 5 and the number of actually replenished pack products 5 by using any other method without relying on the image recognition performed by the operation determination unit 32.

In this embodiment, each of the magazines 513 is configured such that as the remaining number of pack products 5 decreases, the slider 515 moves forward. Thus, for example, each of the magazines 513 may be provided with a means for detecting the position of the slider 515 to detect the remaining number of pack products 5 in the magazine 513 on the basis of the detected position of the slider 515. The position of the slider 515 may be identified by the distance to the slider 515 detected by a distance measurement sensor disposed behind the magazine 513, identified by the state of the urging portion 516 that urges the slider 515 forward, or identified using any other method. When a distance measurement sensor is used, it is possible to detect the remaining number of items in the magazine 513 from the distance to the last pack product 5 (at the farthest position), rather than by using the position of the slider 515. Additionally, each of the magazines 513 may have a weight sensor installed on the bottom plate portion of the mounting portion 514 thereof to detect the remaining number of pack products 5 by using a weight measured by the weight sensor.

The first control unit 30 may sequentially detect the remaining numbers of pack products 5 in the respective magazines 513 by using such a method and set the amount of change (quantity) in the remaining number of items in the magazine 513 corresponding to the position information included in the projection instruction as the number of pack products 5 that have been picked up or replenished. In this manner, the method for acquiring the number of actually picked up pack products 5 and the number of actually replenished pack products 5 is not limited in any way. The number of pack products 5 acquired in the way described above is sent from the first control unit 30 to the assistant PC 10.

Additionally, the first control unit 30 can identify a magazine 513 on which a pick-up operation or replenishment operation has been performed, by using a change in the remaining number of items in each of the magazines 513 (which may be directly a change in the position of the slider 515, a change in distance, or a change in weight). In this manner, a pick-up operation and replenishment operation may be detected without relying on the image recognition performed by the operation determination unit 32, and abnormality of each operation may be determined.

If the first control unit 30 determines that the pick-up operation or replenishment operation is abnormal, the first control unit 30 may instruct the projection control unit 31 to perform an incorrect-operation notification display indicating that the pick-up operation or replenishment operation is abnormal. In this case, in accordance with the instruction, the projection control unit 31 causes the projector 56 to perform an incorrect-operation notification display (for example, "the pick-up location is wrong" or "the replenishment location is wrong"). In consequence, such an incorrect-operation notification display is performed on the display screen 520.

On the other hand, if the first control unit 30 determines that the pick-up operation or replenishment operation is normal, the first control unit 30 notifies the assistant PC 10 of completion of the pick-up operation or completion of replenishment together with the number of picked up or replenished pack products.

### [Second Control Unit]

The second control unit 40 includes a position notification processing unit 41, an operation determination unit 42, a drawer rack management unit 43, and so on. These are software elements and are embodied by a CPU executing a control program stored in a memory such as a RAM or a ROM.

Upon receipt of a pick-up instruction or replenishment instruction from the assistant PC 10, the position notification processing unit 41 turns on a corresponding carton location notification LED 62 disposed in the carton fixture 60 in accordance with the instruction. Specifically, the pick-up instruction and replenishment instruction include position information of an accommodation area in a drawer rack 61 from which a carton product is to be picked up or which is to be replenished with a carton product. The position notification processing unit 41 turns on a carton location notification LED 62 corresponding to the position information. The position notification processing unit 41 may hold correspondence information between the position of each accommodation area and a corresponding carton location notification LED 62 and identify the carton location notification LED 62 corresponding to the position information of the accommodation area included in the pick-up instruction or replenishment instruction on the basis of the correspondence information.

A pick-up instruction for collectively picking up may include position information of a plurality of accommodation areas. In this case, it is desirable that the position notification processing unit 41 collectively turn on the plurality of the carton location notification LEDs 62 corresponding to the plurality of pieces of position information.

The operation determination unit 42 determines whether an operation of picking up a carton product from an accommodation area of a drawer rack 61 by the operator or an operation of replenishing the accommodation area with a carton product by the operator is normal or abnormal.

If a pick-up instruction has been received, then, the operation determination unit 42 determines that the pick-up operation is normal upon confirming that a carton product has been picked up from the target accommodation area on the basis of sensing information from the detection sensor. On the other hand, upon confirming that a carton product has been picked up from an accommodation area other than the target accommodation area, the operation determination unit 42 determines that the pick-up operation is abnormal.

If a replenishment instruction has been received, then, the operation determination unit 42 determines that the replenishment operation is normal upon confirming that a carton product has been accommodated in the target accommodation area on the basis of sensing information from the detection sensor, and determines that the replenishment operation is abnormal upon confirming that a carton product has been accommodated in an accommodation area other than the target accommodation area.

If the operation determination unit 42 determines that the pick-up operation or replenishment operation is normal, the operation determination unit 42 notifies the assistant PC 10 of completion of the pick-up operation or completion of replenishment. On the other hand, if the operation determination unit 42 determines that the pick-up operation or replenishment operation is abnormal, the operation determination unit 42 may blink the carton location notification LED 62 corresponding to the accommodation area from which a carton product would be picked up or which would be replenished with a carton product, or provide an error output using a beeper or the like.

If an instruction is provided to pick up or replenish a plurality of carton products, the pick-up instruction or replenishment instruction may include position information of a plurality of accommodation areas. In this case, it is desirable that the position notification processing unit 41 turn on the plurality of carton location notification LEDs 62 corresponding to the position information of the plurality of accommodation areas and that the operation determination unit 42 determine an operation of picking up carton products from the plurality of accommodation areas or replenishing the plurality of accommodation areas with carton products.

The drawer rack management unit 43 controls the locking mechanisms for the drawer racks 61. Specifically, in accordance with a pick-up instruction or replenishment instruction sent from the assistant PC 10, the drawer rack management unit 43 sets the locking mechanism for a corresponding drawer rack 61 to unlocked state after a corresponding carton location notification LED 62 is turned on. Thereafter, upon detection that the drawer rack 61 is completely accommodated, the drawer rack management unit 43 sets the locking mechanism for the drawer rack 61 to locked state.

### [Assistant PC]

The assistant PC 10 includes a fixture assistance unit 101, a customer management unit 102, an order terminal assistance unit 103, a management operation processing unit 104, a customer management database (DB) 105, a store database (DB) 106, and so on. These are software elements and are embodied by the CPU 11 executing a control program stored in the memory 12, such as a RAM or a ROM.

The customer management DB 105 stores customer registration information.

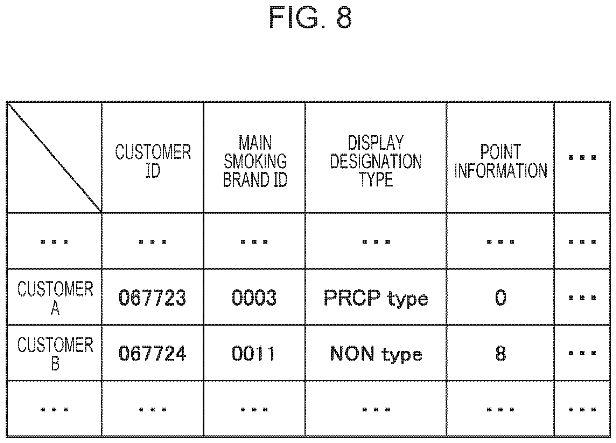

Fig. 8 is a diagram illustrating an example customer information table. In this embodiment, the customer registration information is stored in a customer information table.

As illustrated in Fig. 8, the customer information table stores, for each customer, a customer ID, a main smoking brand ID, a display designation type, point information, and so on. The customer registration information stored in the customer information table is managed by a customer management server device external to the subject system 1 and is reflected in the customer management DB 105.

The customer ID is an identifier that can identify a customer (smoker). In this embodiment, the customer ID is set as identification information unique to all the customers managed by the customer management server device. The customer ID may be an identifier that can be a communication address, like an email address or an ID assigned to a mobile terminal of a customer, or an identifier that can identify the customer in any other service, like an SNS (Social Network Service) account.

The main smoking brand ID is a brand ID of a main smoking brand of a customer. The brand ID is an identifier that can identify a brand of tobacco products and may be an identifier uniquely assigned in the subject system or an identifier assigned outside the subject system, such as a JAN (Japan Article Number) code. In this embodiment, it is not possible to distinguish between a pack product and a carton product of the same brand only by using a brand ID.

As used herein, the "main smoking brand" refers to a brand of a tobacco product registered for each customer (smoker) in the subject system 1 and can also be referred to as a registered brand. A plurality of main smoking brands may be registered for each customer (smoker). In this case, a single customer ID is associated with a plurality of main smoking brand IDs.

The display designation type is designation information of a customer concerning display of tobacco-product-related information (hereinafter referred to sometimes as related information for short) on the order terminal 20, and can also be referred to as display designation information of a customer.

In this embodiment, examples of the tobacco-product-related information include giveaway information, campaign information, and questionnaire information. The details of the tobacco-product-related information will be described below.

Accordingly, the display designation type includes a type (hereinafter referred to as NON type) specifying that no related information is displayed on the order terminal 20, a type (hereinafter referred to as OK type) that allows the order terminal 20 to display related information, a type (hereinafter referred to as PR type) that allows the order terminal 20 to display giveaway information, a type (hereinafter referred to as PRCP type) that allows the order terminal 20 to display giveaway information or campaign information, and a type (hereinafter referred to as QU type) that allows the order terminal 20 to display questionnaire information. In the example in Fig. 8, the display designation type of customer A with customer ID "067723" is set to the PRCP type, and the display designation type of customer B with customer ID "067724" is set to the NON type. While this embodiment does not provide a type that allows the order terminal 20 to display campaign information, or a type that allows the order terminal 20 to display questionnaire information and campaign information or giveaway information, such a display designation type may be provided, or any other display designation type may be provided.

The setting of the display designation type can be changed by operation of the customer mobile terminal, details of which will be described below, and the initial value of the display designation type is set to, for example, the OK type.

From the foregoing, the customer management DB 105 can be referred to as a designation holding means for holding display designation information (display designation type) generated through an operation of the customer mobile terminal by the customer, in association with the customer identifier (customer ID) of the customer.

The point information is information indicating the number of points assigned to each customer.

The store DB 106 stores brand master information, store-specific brand information, tobacco-product-related master information, fixture setting information, a fixture event log, and so on.

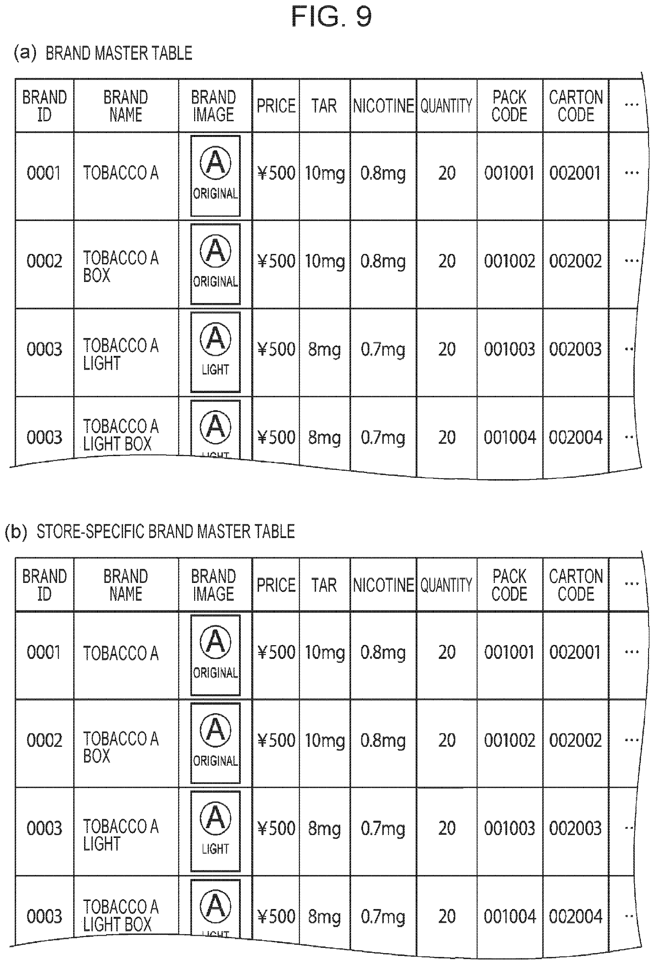

Fig. 9(a) is a diagram illustrating an example brand master table, and Fig. 9(b) is a diagram illustrating an example store-specific brand information table. In this embodiment, the brand master information is stored in the brand master table, and the store-specific brand information is stored in the store-specific brand information table.

As illustrated in Fig. 9(a), the brand master table is a master table storing, for each brand, brand information such as a brand ID, a brand name, a brand image, a price, an amount of tar, an amount of nicotine, a quantity per pack, a pack code, and a carton code. In this embodiment, the brand master table stores brand information of all brands on which information is available from tobacco manufacturers. That is, the brand master table stores information on newly released brands or rare brands that are yet to be dealt in by the subject store and discontinued brands that were once dealt in but are not currently dealt in by the subject store. However, the brand master table does not necessarily store information on the discontinued brands. The brand master table may also store other brand information not illustrated in Fig. 9(a), such as a smoke taste.

The pack code is a JAN code on a package of a pack product of a corresponding brand. The carton code is a JAN code on a package of a carton product of a corresponding brand.

The assistant PC 10 obtains the latest brand information from an external server device and reflects the latest brand information in the brand master table.

As illustrated in Fig. 9(b), the store-specific brand information table is a table storing brand information for items (fields) similar to those of the brand master table. The store-specific brand information table is different from the brand master table in that the store-specific brand information table stores only brand information of brands currently dealt in by the subject store.

In this embodiment, as described above, the tobacco-product-related master information includes at least one of giveaway information, campaign information, and questionnaire information. The tobacco-product-related master information is managed by, for example, one or more external server devices. In this embodiment, the tobacco-product-related master information is assumed to be managed by an external sales promotion assistance server device. Accordingly, the assistant PC 10 obtains the latest tobacco-product-related master information from the external sales promotion assistance server device and stores the latest tobacco-product-related master information in the store DB 106.

Both the giveaway information and the campaign information are information for sales promotion of tobacco products. While there is no clear difference between a giveaway and a campaign, in this embodiment, a giveaway and a campaign are identified from each other as follows. A giveaway indicates that a customer is granted a privilege on condition that the customer has purchased a tobacco product of a specified brand, and a campaign indicates that a customer is granted a privilege on condition that at least the customer has applied for the campaign and won a prize. Accordingly, the giveaway information can be represented as information indicating that a customer is granted a privilege, and the campaign information can be represented as information indicating that a customer is able to be granted a privilege in accordance with specific requirements (requirements including at least application and winning a prize).

For example, a distribution of samples conditioned on the purchase of a tobacco product of a specified brand or a sweepstakes (called instant win or the like) in which the winner is determined on the spot is also included in the giveaway. Thus, the giveaway information can include sample distribution information and instant-win information.

The giveaway information and the campaign information are information concerning a giveaway and a campaign, the content of a privilege, requirements for giving a privilege, the period of the giveaway or campaign, and so on.

The questionnaire information is information including questions for a customer.

As described in the SUMMARY section, the individual pieces of tobacco-product-related information included in the tobacco-product-related master information are not limited to the information illustrated in this embodiment.

The individual pieces of tobacco-product-related information (related information) included in the tobacco-product-related master information may be associated with the brand ID of a tobacco product of a specific brand. For example, if giveaway information conditioned on the purchase of a tobacco product of a certain brand is present, the giveaway information may be associated with the brand ID of the brand. If a campaign is performed for a certain brand group, the brand IDs of brands of tobacco products belonging to the brand group may be associated with the campaign information. If the questionnaire information is not related to a brand of a tobacco product, the questionnaire information may not be associated with any brand ID.

Alternatively, two or more types of questionnaire information having different patterns of questions may be included in the tobacco-product-related master information as tobacco-product-related information. In this case, a flag may be associated with each type of questionnaire information so that a different type of questionnaire information is displayed depending on whether a customer ID has been acquired when the tobacco-product-related information is displayed.

From the foregoing, the store DB 106 can be referred to as a master information storage unit that stores tobacco-product-related master information, the tobacco-product-related master information including at least one of questionnaire information including a question for a customer, giveaway information indicating that a customer is granted a privilege, and campaign information indicating that a customer is able to be granted a privilege in accordance with a specific requirement.

The fixture setting information includes pack fixture management information, carton fixture management information, and modification or discontinuation reservation information.

The pack fixture management information stores pieces of magazine information corresponding to the total number of magazines 513 disposed in the pack fixture 50, each of the pieces of magazine information being information in which a brand ID, the position information of a corresponding magazine 513, and the remaining number of items are associated with each other.

As described above, the position information of the magazines 513 is information for identifying the positions of the respective magazines 513 in an image projected by the projector 56. Accordingly, the position information of a magazine 513 may be, for example, a position identifier formed by the number of the magazine storage rack 512, the number of the shelf 511, and the position number on the shelf 511 (such as the position counted from the right or left). If the projection control unit 31 of the first control unit 30 is capable of identifying a local region corresponding to the position of each of the magazines 513 in the projection image, the position information of the magazines 513 may be magazine identifiers that can identify the respective magazines 513.

In the pack fixture management information, the brand ID of the brand of tobacco products accommodated in the magazine 513 identified by the position information of the magazine 513 and the remaining number of tobacco products in the magazine 513 are associated with each other.

The carton fixture management information is information in which, for each of the accommodation areas formed in the carton fixture 60, position information of the accommodation area, a brand ID indicating the brand of carton products accommodated in the accommodation area, and the accommodation (presence or absence) of the carton products are associated with each other. The position information of each accommodation area included in the carton fixture management information is formed by, for example, the number of the drawer rack 61, the column number in the drawer rack 61 in the left-right direction, and the partition number in the drawer rack 61 in the front-rear direction. However, it is desirable that the position information of each accommodation area allow the position notification processing unit 41 of the second control unit 40 to identify the carton location notification LED 62 corresponding to each of the accommodation areas, and may be an accommodation area identifier that can identify each accommodation area.

The modification or discontinuation reservation information is information set by the operator designating a brand that is being dealt in at the current point in time but will not be dealt in (referred to as modified or discontinued brand) on a menu displayed on the fixture management terminal 70, and can also be information for making a reservation to designate a modified or discontinued brand to be replaced in the future. The modification or discontinuation reservation information includes the brand ID of the modified or discontinued brand.

The fixture event log includes, for each event that has occurred in the pack fixture 50 or the carton fixture 60, information such as the date and time of occurrence of the event (referred to simply as date and time), a fixture ID that identifies a fixture in which the event has occurred, an event ID that identifies the content of the event, a brand ID, or the quantity.

The fixture ID includes an ID indicating the pack fixture 50 and an ID indicating the carton fixture 60.

The event ID includes an ID indicating that a pack product or carton product has been picked up, an ID indicating that a pack product or a carton product has been replenished, an ID indicating that a carton product has been picked up to replenish pack products of the same brand, and so on.

The brand ID and the quantity indicate the brand handled in the corresponding event and the quantity, respectively. Such a fixture event log is updated by the fixture assistance unit 101 described below.

The fixture assistance unit 101 communicates with the first control unit 30 and the second control unit 40 to assist the pack fixture 50 and the carton fixture 60 in operation for management.

Upon acquiring ordered brand information from the order terminal 20, the fixture assistance unit 101 sends an instruction regarding an ordered brand to the first control unit 30 or the second control unit 40 on the basis of the ordered brand information. Specifically, the fixture assistance unit 101 determines that the order unit is either the pack product or the carton product, or both on the basis of an order unit ID included in the ordered brand information. If the order unit includes the pack product, the fixture assistance unit 101 sends a projection instruction to the first control unit 30. At this time, the fixture assistance unit 101 extracts, based on the brand ID of the ordered brand included in the ordered brand information, the position information of a magazine 513 corresponding to the brand ID from the pack fixture management information included in the fixture setting information in the store DB 106 described above such that the projection instruction includes the position information and the quantity included in the ordered brand information.

If the order unit includes the carton product, on the other hand, the fixture assistance unit 101 sends a pick-up instruction to the second control unit 40. At this time, the fixture assistance unit 101 extracts, based on the brand ID of the ordered brand included in the ordered brand information, the position information of an accommodation area corresponding to the brand ID from the carton fixture management information included in the fixture setting information in the store DB 106 described above such that the pick-up instruction includes the position information and the quantity included in the ordered brand information.

After that, upon receipt of a notification of completion of the pick-up operation from the first control unit 30, the fixture assistance unit 101 adds a record for the picking up of pack products to the fixture event log in the store DB 106. This record contains the date and time, the fixture ID (the pack fixture 50), the event ID (picking up), the brand ID (brand ID of the ordered brand), and the quantity (quantity for the ordered brand).

Likewise, upon receipt of a notification of completion of the pick-up operation from the second control unit 40 (the operation determination unit 42), the fixture assistance unit 101 adds a record for the picking up of carton products to the fixture event log in the store DB 106. This record contains the date and time, the fixture ID (the carton fixture 60), the event ID (picking up), the brand ID (brand ID of ordered brand), and the quantity (quantity for the ordered brand).

In contrast, upon acquiring ordered brand information from the order terminal 20 when the locking mechanism for at least one of the drawer racks 61 in the carton fixture 60 is in unlocked state, the fixture assistance unit 101 suspends the transmission of a pick-up instruction based on the ordered brand information until the locking mechanism is set to locked state. The fixture assistance unit 101 can acquire the state of the locking mechanisms for the drawer racks 61 from the drawer rack management unit 43 of the second control unit 40.

While the fixture assistance unit 101 suspends the transmission of a pick-up instruction, the management operation processing unit 104 described below may output display for notifying the operator (salesperson) that an order has been placed to the fixture management terminal 70. This allows the operator (salesperson) who is involved in the replenishment process while facing the carton fixture 60 to quickly grasp that an order has been placed.

In response to a replenishment request operation being performed using the fixture management terminal 70, the fixture assistance unit 101 determines whether a replenishment brand specified by the replenishment request operation has been allocated to any of the magazines 59 of the pack fixture 50 or any of the accommodation areas of the carton fixture 60, and then sends an instruction regarding the replenishment brand to the first control unit 30 or the second control unit 40. The replenishment brand refers to a brand of a tobacco product to be replenished.

The replenishment request operation is performed using the fixture management terminal 70 for replenishment of a tobacco product or supply of new tobacco products. For replenishment of tobacco products, tobacco products of the replenishment brand have already been accommodated in the pack fixture 50 or the carton fixture 60, and the store-specific brand information table in the store DB 106 stores brand information of the replenishment brand. For supply of new tobacco products, in contrast, tobacco products of the replenishment brand have not been accommodated in the pack fixture 50 or the carton fixture 60, and the store-specific brand information table does not store brand information of the replenishment brand.

Accordingly, the fixture assistance unit 101 refers to the store-specific brand information table in the store DB 106 on the basis of the brand ID, the pack code, or the carton code for the replenishment brand, and can thus determine whether the replenishment brand has been allocated to any of the magazines 59 of the pack fixture 50 or any of the accommodation areas of the carton fixture 60.

In this embodiment, moreover, determination as to whether the pack fixture management information and the carton fixture management information in the fixture setting information stored in the store DB 106 have a record containing the brand ID of the replenishment brand can be performed to determine whether the replenishment brand has been allocated to any of the magazines 59 of the pack fixture 50 or any of the accommodation areas of the carton fixture 60.

In the following description, any of these determinations may be referred to as determination as to whether a brand has been allocated to any of the magazines 59 or any of the accommodation areas.

There are roughly following three types of replenishment request operations for replenishment of tobacco products.

The first type is a replenishment request operation for selecting a brand specified for replenishment from a brand list of tobacco products stored in the pack fixture 50 or the carton fixture 60 by the operator (salesperson). The display of the brand list and selection of a brand from the brand list are performed using the fixture management terminal 70. This operation is hereinafter referred to as first replenishment request operation.

The second type is a replenishment request operation for designating a brand specified for replenishment by the operator using a barcode scanner connected to the fixture management terminal 70 to read a JAN code of a pack product specified for replenishment. Also in this case, a "replenish pack product by scanning" menu is selected from the menu displayed on the fixture management terminal 70. This operation is hereinafter referred to as second replenishment request operation.

The third type is a replenishment request operation for designating a brand specified for replenishment by the operator using a barcode scanner connected to the fixture management terminal 70 to read a JAN code of a carton product specified for replenishment. Also in this case, a "replenish carton product by scanning" menu is selected from the menu displayed on the fixture management terminal 70. This operation is hereinafter referred to as third replenishment request operation.

The fixture assistance unit 101 acquires an operation ID, which can identify one of the first, second, and third replenishment request operations described above, from the fixture management terminal 70. Accordingly, the fixture assistance unit 101 performs the following replenishment process based on the operation ID.

Upon acquiring the operation ID indicating the second replenishment request operation and a JAN code of a pack product from the fixture management terminal 70, the fixture assistance unit 101 identifies brand information storing the JAN code as a pack code from the store-specific brand information table in the store DB 106. Further, the fixture assistance unit 101 extracts, based on the brand ID of the identified brand information, the position information of a magazine 513 of the pack fixture 50 associated with the brand ID from the pack fixture management information in the fixture setting information in the store DB 106, and sends a projection instruction including the extracted position information and notification designation of a replenishment notification display to the first control unit 30. In the pack fixture 50, accordingly, the projector 56 is controlled, and a replenishment notification display notifying the operator of the position of the magazine 513 to which the brand ID of the replenishment brand is allocated is output.

After that, upon receipt of a notification of completion of replenishment from the first control unit 30, the fixture assistance unit 101 updates, based on the quantity included in the notification, the remaining number of items in the target magazine 513 in the pack fixture management information in the fixture setting information in the store DB 106. In addition, the fixture assistance unit 101 adds a record for replenishment of a pack product to the fixture event log in the store DB 106. This record contains the date and time, the fixture ID (the pack fixture 50), the event ID (replenishment), the brand ID (brand ID of the replenishment brand), and the quantity (number of items to be replenished).

Upon acquiring the operation ID indicating the third replenishment request operation and a JAN code of a carton product from the fixture management terminal 70, the fixture assistance unit 101 identifies brand information storing the JAN code as a carton code from the store-specific brand information table in the store DB 106. The fixture assistance unit 101 sends a replenishment instruction including the brand ID of the brand information to the second control unit 40. Accordingly, in the carton fixture 60, a carton location notification LED 62 notifying the operator of the position of an accommodation area to which the brand ID of the replenishment brand is allocated is turned on, and the locking mechanism for the drawer rack 61 having the accommodation area is set to unlocked state. As a result, the accommodation area can be replenished with a carton product.

After that, upon receipt of a notification of completion of replenishment from the second control unit 40, the fixture assistance unit 101 sets the brand ID of the replenishment brand in the record for the target accommodation area in the carton fixture management information in the fixture setting information in the store DB 106, and sets the accommodation state "present". In addition, the fixture assistance unit 101 adds a record for replenishment of a carton product to the fixture event log in the store DB 106. This record contains the date and time, the fixture ID (the carton fixture 60), the event ID (replenishment), the brand ID (brand ID of the replenishment brand), and the quantity (number of items to be replenished = 1).

Upon acquiring the operation ID indicating the first replenishment request operation and the brand ID of the replenishment brand from the fixture management terminal 70, first, the fixture assistance unit 101 sends a pick-up instruction including the brand ID of the replenishment brand to the second control unit 40. Accordingly, in the carton fixture 60, a carton location notification LED 62 notifying the operator of the position of an accommodation area that accommodates carton products of the replenishment brand is turned on, and the locking mechanism for the drawer rack 61 having the accommodation area is set to unlocked state.

This allows the operator (salesperson) to pick up a carton product of the replenishment brand from within the accommodation area of the drawer rack 61. Upon the detection sensor of the drawer rack 61 detecting picking up of the carton product, the fixture assistance unit 101 receives completion of the pick-up operation from the second control unit 40. Accordingly, the fixture assistance unit 101 can instruct the fixture management terminal 70 to start the barcode scanner.

At this time, in response to receipt of completion of the pick-up operation, the fixture assistance unit 101 sets the accommodation state "absence" in the record for the target accommodation area in the carton fixture management information in the fixture setting information in the store DB 106, and adds a record for dispensing of a carton product to the fixture event log in the store DB 106.

The operator (salesperson) unwraps the package of the picked up carton product to remove a plurality of pack products, and replenishes the pack fixture 50 with the pack products. At this time, the operator reads the JAN codes of the pack products by using the barcode scanner of the fixture management terminal 70.

The fixture assistance unit 101 acquires the JAN codes of the pack products of the replenishment brand from the fixture management terminal 70, identifies brand information in which the JAN codes are set as the pack code from the store-specific brand information table in the store DB 106, and extracts the brand ID corresponding to the JAN codes from the brand information. Accordingly, the fixture assistance unit 101 confirms that a match is found between the brand ID previously acquired together with the operation ID of the first replenishment request operation and the brand ID corresponding to the JAN codes of the pack products, extracts the position information of a magazine 513 to which the brand ID is allocated from the pack fixture management information in the fixture setting information in the store DB 106, and sends a projection instruction including the position information and notification designation of a replenishment notification display to the first control unit 30. In the pack fixture 50, accordingly, the projector 56 is controlled, and a replenishment notification display notifying the operator of the position of the magazine 513 to which the brand ID of the replenishment brand is allocated is output.

After that, upon receipt of a notification of completion of replenishment from the first control unit 30, the fixture assistance unit 101 updates, based on the quantity included in the notification, the remaining number of items in the target magazine 513 in the pack fixture management information in the fixture setting information in the store DB 106. In addition, the fixture assistance unit 101 adds a record for replenishment of pack products to the fixture event log in the store DB 106. This record contains the date and time, the fixture ID (the pack fixture 50), the event ID (replenishment), the brand ID (brand ID of the replenishment brand), and the quantity (number of items to be replenished).

The second and third replenishment request operations described above are also performed when a new tobacco product is supplied.

In this case, brand information storing, as a pack code, the JAN code of a pack product sent from the fixture management terminal 70 has not been stored in the store-specific brand information table in the store DB 106. In addition, brand information storing, as a carton code, the JAN code of a carton product sent from the fixture management terminal 70 has not been stored in the store-specific brand information table. In addition, a record containing the brand ID corresponding to the JAN code of the pack product or the carton product is not present in the pack fixture management information or the carton fixture management information in the fixture setting information in the store DB 106.

Accordingly, in response to the second replenishment request operation, the fixture assistance unit 101 refers to the fixture setting information in the store DB 106 to search for a magazine 513 to which no brand has been allocated. Likewise, in response to the third replenishment request operation, the fixture assistance unit 101 searches for an accommodation area to which no brand has been allocated.

The magazine 513 to which no brand has been allocated can be identified by searching the pack fixture management information for the position information of a magazine 513 in which no brand ID has been set. The accommodation area to which no brand has been allocated can be identified by searching the carton fixture management information for the position information of an accommodation area in which no brand ID has been set.

If the magazine 513 to which no brand has been allocated is successfully identified, the fixture assistance unit 101 sends a projection instruction including the position information of the unallocated magazine 513 and notification designation of a replenishment notification display to the first control unit 30. Thereafter, processing similar to that for replenishment of a tobacco product described above is performed.

In contrast, if the accommodation area to which no brand has been allocated is successfully identified, the fixture assistance unit 101 sends a replenishment instruction including the position information of the unallocated accommodation area to the second control unit 40. Thereafter, processing similar to that for replenishment of a tobacco product described above is performed.

The brand ID of a newly supplied brand is acquired from the brand master table in the store DB 106. Specifically, the fixture assistance unit 101 can identify, in the brand master table in the store DB 106, brand information storing, as a pack code, the JAN code of a pack product sent from the fixture management terminal 70, and acquire a brand ID from the brand information as the brand ID of the newly supplied brand. Further, the fixture assistance unit 101 can identify, in the brand master table in the store DB 106, brand information storing, as a carton code, the JAN code of a carton product sent from the fixture management terminal 70, and acquire a brand ID from the brand information as the brand ID of the newly supplied brand.

In some cases, a magazine 513 or accommodation area to which no brand has been allocated may be absent. In such cases, the fixture assistance unit 101 checks whether the fixture setting information in the store DB 106 contains modification or discontinuation reservation information. If modification or discontinuation reservation information is contained, the fixture assistance unit 101 extracts, based on a brand ID of a modified or discontinued brand indicated by the modification or discontinuation reservation information, all pieces of position information of magazines 513 of the pack fixture 50 associated with the brand ID of the modified or discontinued brand from the pack fixture management information in the fixture setting information in the store DB 106, and sends a projection instruction including all of the extracted pieces of position information and notification designation for a collective pick-up notification display to the first control unit 30. In addition, the fixture assistance unit 101 extracts all pieces of position information of accommodation areas of the carton fixture 60 associated with the brand ID of the modified or discontinued brand from the carton fixture management information in the fixture setting information in the store DB 106, and sends a pick-up instruction including all of the extracted pieces of position information to the second control unit 40. In the pack fixture 50, accordingly, the projector 56 is controlled, and a replenishment notification display notifying the operator of all the positions of the magazines 513 to which the brand ID of the modified or discontinued brand is allocated and promoting collectively picking up is performed. As a result, the operator is collectively notified of all the positions of the accommodation areas that accommodate carton products of the modified or discontinued brand through the carton location notification LEDs 62.

When tobacco products of the modified or discontinued brand are picked up from the pack fixture 50 and the carton fixture 60 by the operator in response to the collective pick-up instruction described above, thereafter, processing similar to that for the second or third replenishment request operation described above is performed. That is, the fixture assistance unit 101 sends a projection instruction or a replenishment instruction, including the positions of the magazines 513 or the positions of the accommodation areas to which the modified or discontinued brand has been allocated and to which pack products and carton products of the newly supplied brand are to be supplied, to the first control unit 30 or the second control unit 40. This enables replenishment of tobacco products of the newly supplied brand.

If no modification or discontinuation reservation information is contained, on the other hand, the fixture assistance unit 101 instructs the management operation processing unit 104, described below, to cause the fixture management terminal 70 to display a modified or discontinued brand selection screen. After that, the fixture assistance unit 101 acquires modification or discontinuation designation information sent from the fixture management terminal 70, and thereafter, processing similar to that when modification or discontinuation reservation information is contained is performed.

The customer management unit 102 mainly manages the customer registration information.

Specifically, upon acquiring a customer ID from the order terminal 20, the customer management unit 102 extracts the main smoking brand ID, the display designation type, and the point information corresponding to the customer ID from the customer management DB 105, and sends the extracted information to the order terminal 20. If the customer management DB 105 does not store the main smoking brand ID corresponding to the customer ID, the customer management unit 102 sends, to the order terminal 20, main-smoking-brand-unspecified information indicating that the main smoking brand ID is unspecified.

Accordingly, when the main smoking brand ID is sent to the order terminal 20, as described below, the order terminal 20 outputs a display (brand order screen described below) that facilitates easy ordering of a tobacco product of a brand identified by the main smoking brand ID.

If a plurality of main smoking brand IDs are associated with a customer ID in the customer management DB 105, the customer management unit 102 extracts the plurality of main smoking brand IDs from the customer management DB 105, and sends the extracted plurality of main smoking brand IDs to the order terminal 20.

Accordingly, the order terminal 20 provides a display to enable an operation of collectively designating tobacco products of a plurality of brands identified by the plurality of main smoking brand IDs. Thus, even a smoker (customer) who changes the brand depending on the environment, situation, or the like is able to easily designate a tobacco product of a desired brand by using the order terminal 20.

In addition, the customer management unit 102 performs processing related to tobacco-product-related information in accordance with an operation of a customer on the order terminal 20.

Specifically, the customer management unit 102 checks, based on the brand ID of the ordered brand included in the ordered brand information received from the order terminal 20, the presence or absence of giveaway information or campaign information associated with the brand ID in the tobacco-product-related master information stored in the store DB 106. If giveaway information or campaign information associated with the brand ID of the ordered brand is present, the customer management unit 102 determines whether privilege granting requirements presented in the giveaway information or campaign information include a purchase of a tobacco product of the brand. If a purchase of a tobacco product of the brand is included, the customer management unit 102 transmits a purchase of a tobacco product of the brand together with the customer ID to the external sales promotion assistance server device. Consequently, in the sales promotion assistance server device, information corresponding to the privilege (for example, point information) is associated with the customer ID.

As described below, in response to an application for a campaign being entered using the order terminal 20, the customer management unit 102 generates application information of the target campaign and transmits the application information to the external sales promotion assistance server device. If the application information generated by the customer management unit 102 has content and format specified by the sales promotion assistance server device, the specific content and format thereof is not limited. For example, the application information includes information that can identify the customer ID and the target campaign. From the foregoing, the customer management unit 102 can be referred to as a generation means for generating application information indicating that a customer indicated by a customer identifier has entered an application in response to a specified operation being performed using the order terminal on which giveaway information or campaign information is being displayed.

According to this embodiment, therefore, when a customer orders a tobacco product using the order terminal 20, the customer can apply for the campaign directly using the order terminal 20. Thus, the customer can easily be granted a privilege without missing the chance to receive the privilege.

Likewise, as described below, in response to questionnaire being answered using the order terminal 20, the customer management unit 102 transmits questionnaire answer information to the external sales promotion assistance server device.

Further, the customer management unit 102 also performs a process for transferring related information to the customer mobile terminal. Specifically, in response to receipt of a specified operation (for example, pressing a "view with smartphone" button described below) at the order terminal 20 on which a summary of giveaway information or campaign information is being displayed, the customer management unit 102 performs processing such that details of its related information are visible to the customer on the customer mobile terminal. In response to receipt of a specified operation (for example, pressing a "do with smartphone" button described below) at the order terminal 20 on which questionnaire information is being displayed, the customer management unit 102 performs processing such that the customer can answer the questionnaire information using the customer mobile terminal. Accordingly, the customer management unit 102 can be referred to as an information providing means.

In this embodiment, upon receipt of transfer instruction information from the order terminal 20, the customer management unit 102 transmits to the external sales promotion assistance server device a related information transmission instruction including the previously acquired customer ID and the brand ID of the target brand or an ID of questionnaire information. Consequently, in response to receipt of this instruction, the sales promotion assistance server device transmits questionnaire information, or giveaway information or campaign information associated with the brand ID to the customer mobile terminal corresponding to the customer ID. However, the customer management unit 102 may transmit, instead of an instruction, related information directly to the customer mobile terminal. Alternatively, the customer management unit 102 may instruct the order terminal 20 to transmit related information to the customer mobile terminal. In this case, related information is sent from the order terminal 20 to the customer mobile terminal using short-range wireless communication or the like.

Alternatively, the customer management unit 102 may generate a two-dimensional code in which information for accessing the related information, such as an URL, is encoded, and send the two-dimensional code to the order terminal 20 to cause the order terminal 20 to display the two-dimensional code. In this case, the customer uses their own customer mobile terminal to read the two-dimensional code to view the related information.

The order terminal assistance unit 103 assists the order terminal 20 in processing and, in particular, manages various screens to be displayed on the order terminal 20. In this embodiment, the order terminal assistance unit 103 generates or updates screen data of a brand selection screen to be displayed on the order terminal 20, and transmits the screen data to the order terminal 20.

For example, in response to a supply of a tobacco product of the newly supplied brand described above, the order terminal assistance unit 103 automatically updates screen data of a brand selection screen so that a tobacco product of the newly supplied brand can be selected on the brand selection screen on the order terminal 20, and sends the updated screen data to the order terminal 20. In response to tobacco products of a modified or discontinued brand being collectively dispensed, the order terminal assistance unit 103 automatically updates screen data of a brand selection screen so as to prevent a tobacco product of the modified or discontinued brand from being selected on the brand selection screen on the order terminal 20, and transmits the updated screen data to the order terminal 20.

Further, the order terminal assistance unit 103 updates screen data so that a display area of a brand associated with giveaway information or campaign information on a brand selection screen is assigned an image presenting the association (a PR image or CP image described below).

To change the brand selection screen, there are conceivable various forms of screen data sent from the order terminal assistance unit 103 to the order terminal 20 and forms of methods for displaying the changed brand selection screen on the order terminal 20, and these forms are not limited in this embodiment. For example, brand information including a brand name, a brand image, and so on and position information for displaying the brand information may be sent to the order terminal 20 as screen data, and the order terminal 20 may automatically change the brand selection screen in accordance with the screen data and display the changed brand selection screen. Furthermore, the order terminal assistance unit 103 may generate Web page data of the brand selection screen using HTML (HyperText Markup Language), XML (Extensible Markup Language), or the like and send the data to the order terminal 20, and the order terminal 20 may read the data and display the brand selection screen on a browser.

Further, the order terminal assistance unit 103 transmits the latest tobacco-product-related master information stored in the customer management DB 105 to the order terminal 20. The transmission of such information is performed each time the tobacco-product-related master information is updated, for example. Accordingly, the order terminal 20 presents the presence of giveaway information or campaign information on a brand order screen for a brand that is the target of a giveaway or campaign. The specific form of displaying the individual pieces of related information included in the tobacco-product-related master information (giveaway information, campaign information, and questionnaire information) will be described below.

The management operation processing unit 104 manages the fixture management terminal 70 and, in particular, controls display or the like of the fixture management terminal 70, manages information concerning the pack fixture 50 or the carton fixture 60, which is set by an operation performed on the fixture management terminal 70, and performs other processing.

For example, in response to ordered brand information being acquired from the order terminal 20 during the process of replenishment of tobacco products, as described above, the management operation processing unit 104 causes the fixture management terminal 70 to output a display for notifying the operator that an order has been placed.

In response to a certain brand being selected and a reservation for stopping dealing in the brand being selected on a menu displayed on the fixture management terminal 70, the management operation processing unit 104 acquires modification or discontinuation reservation information including the brand ID of the brand from the fixture management terminal 70, and sets the acquired modification or discontinuation reservation information in the fixture setting information in the store DB 106.

Further, if modification or discontinuation reservation information is not contained during replenishment of tobacco products of a newly supplied brand, the management operation processing unit 104 instructs the fixture management terminal 70 to display a brand list to allow the operator to select a modified or discontinued brand. Accordingly, the fixture management terminal 70 displays the brand list to allow the operator to select a modified or discontinued brand, and the management operation processing unit 104 acquires, from the fixture management terminal 70, modification or discontinuation designation information including the brand ID of the selected modified or discontinued brand.

### [Fixture Management Menu]

Next, a fixture management menu displayed on the fixture management terminal 70 will be described.

The fixture management menu includes a replenishment request menu, a modified or discontinued brand selection menu, and so on. In the following, a description will be given of a portion of the fixture management menu, namely, the replenishment request menu and the modified or discontinued brand selection menu.

The replenishment request menu includes a menu for selecting a brand of a product to be replenished by screen operation, a "replenish pack product by scanning" menu, a "replenish carton product by scanning" menu, and so on.

Upon execution of a menu selected by screen operation, a brand list is displayed to allow the operator to select a brand of a product to be replenished. The operator operation corresponding to the menu corresponds to the first replenishment request operation described above.

Upon execution of the "replenish pack product by scanning" menu or the "replenish carton product by scanning" menu, the barcode scanner connected to the fixture management terminal 70 is started to make a barcode on the package of a tobacco product readable. The operator operations corresponding to these menus correspond to the second and third replenishment request operations described above.

Upon execution of the modified or discontinued brand selection menu, a modified or discontinued brand selection screen is displayed to select a brand (modified or discontinued brand) that is being dealt in at the current point in time but will not be dealt in. The modified or discontinued brand selection screen includes a brand list. Upon execution of this menu at a time other than the time of replenishment of new tobacco products, a brand selected in the brand list is brought into a modified or discontinued brand reservation state. That is, as described above, modification or discontinuation reservation information including the brand ID of the selected brand is sent from the fixture management terminal 70 to the assistant PC 10 and is saved.

The modified or discontinued brand selection screen may also be displayed at the replenishment of new tobacco products. In this case, as described above, modification or discontinuation designation information including the brand ID of the selected brand is sent from the fixture management terminal 70 to the assistant PC 10.

### [Order Terminal]

The order terminal 20 includes an information acquisition unit 201, a display processing unit 202, an order receiving unit 203, and so on. These are software elements and are embodied by the CPU 21 executing a control program stored in the memory 22, such as a RAM or a ROM.

The information acquisition unit 201 is capable of acquiring a captured image from the imaging unit 26 and is further capable of acquiring, from the communication unit 25, customer information received from the mobile terminal of the customer.

If the acquired captured image represents a barcode on the package of a tobacco product, the information acquisition unit 201 can apply an existing barcode reading process to the captured image to acquire a JAN code.

If the acquired captured image represents a two-dimensional code (such as QR code (registered trademark)) displayed on the mobile terminal of the customer, the information acquisition unit 201 can apply an existing two-dimensional code reading process to the captured image to acquire a brand ID of a main smoking brand or a JAN code. In this case, a dedicated application is provided, and the application is installed into the mobile terminal of the customer and is executed to display on the mobile terminal a two-dimensional code produced by encoding the main smoking brand ID of the customer stored in the mobile terminal. The customer captures an image of the displayed two-dimensional code using the imaging unit 26 of the order terminal 20, and accordingly the information acquisition unit 201 can acquire the main smoking brand ID from the two-dimensional code.

If the acquired captured image is a biometric image (for example, a vein image) for biometric authentication, the information acquisition unit 201 can acquire biometric identification information from the biometric image. The acquired biometric identification information may be used directly as a customer ID or may be used for user authentication. The information acquisition unit 201 sends the acquired biometric identification information to the assistant PC 10.

The information acquisition unit 201 can further acquire a customer ID from the customer information acquired via communication. Also in this case, the dedicated application installed in the mobile terminal of the customer is executed, and accordingly the customer ID can be sent from the mobile terminal to the order terminal 20 via short-range wireless communication or the like. The information acquisition unit 201 sends the acquired customer ID to the assistant PC 10.

The display processing unit 202 causes the display unit of the touch panel unit 23 to display a brand order screen in addition to the brand selection screen described above. Upon detection of a user operation of the brand selection screen or the brand order screen by a touch sensor of the touch panel unit 23, the display processing unit 202 executes various processes corresponding to the detected user operation.

Fig. 10 is a diagram illustrating an example brand selection screen, and Fig. 11 is a diagram illustrating an example brand order screen.

The brand selection screen displayed on the order terminal 20 is formed of a brand group selection section G1 for selecting a brand group, and an individual brand selection section G2 that displays brand information of tobacco products of a plurality of brands belonging to the brand group selected in the brand group selection section G1.

In this manner, brands of tobacco products are classified into brand groups according to common name (a representative name of each brand) included in the brand names. In the example in Fig. 9, the brand group "Family A" having brand names including the common representative name of the brand "A" is selected in the brand group selection section G1, and pieces of brand information of tobacco products of all the brands including the common representative name of the brand "A" are displayed in a predetermined arrangement in the individual brand selection section G2. If not all of the pieces of brand information is displayable within one screen, a brand information group, which is a subset of the brand group "Family A", is sequentially displayed by scrolling or the like.

Each of the brand groups displayed in the brand group selection section G1 has a display area to which an indication G11 indicating the presence of a brand associated with giveaway information or an indication G12 indicating the presence of a brand associated with campaign information is assigned, and a brand group that does not include such a brand is not assigned the indication G11 or the indication G12.

The indication G11 and the indication G12 allow the customer to easily grasp a brand group of a brand that is the target of a giveaway or campaign, resulting in sales promotion of the brand group.

In addition, a PR image G22 presenting the target of the giveaway or a CP image G23 presenting the target of the campaign is assigned to a display area for a piece of brand information of the brand that is the target of the giveaway or campaign among pieces of brand information of the plurality of brands displayed in the individual brand selection section G2.

The PR image G22 and the CP image G23 allow the customer to easily grasp tobacco products of a brand that is the target of a giveaway or campaign, resulting in sales promotion of tobacco products of the brand.

When operating the order terminal 20 to order a tobacco product of a desired brand, the customer or salesperson operates such a brand selection screen to search for the desired brand, and presses an image portion representing the desired brand in the brand selection screen. As a result, a brand order screen G3 illustrated in Fig. 11 for a tobacco product of the brand is displayed in pop-up window.

Accordingly, the brand selection screen can be referred to as a brand operation display which enables a designation operation for designating a brand of a tobacco product to be picked up from among tobacco products of a plurality of brands.

The brand order screen G3 is a screen for confirming an order placed for a tobacco product of the brand selected on the brand selection screen. The brand order screen G3 includes brand information of a tobacco product of the selected brand, an order unit designating section G31, an order confirmation operation section G32, and an order cancellation operation section G33. As illustrated in Fig. 11, the brand order screen G3 showing a tobacco product of a brand that is the target of a giveaway or campaign includes an area G35 indicating that the product is the target of the giveaway or campaign. The brand order screen G3 showing a tobacco product of a brand that is not the target of a giveaway or campaign may not include the area G35, or the area G35 may show no information.

The order unit designating section G31 includes "1 pack", "2 packs", "3 packs", and "4 packs" buttons, each indicating the order quantity of pack products, and "1 carton" and "2 cartons" buttons, each indicating the order quantity of carton products, such that the order quantity can be designated by single operation. This allows the customer or salesperson to input the order unit and the quantity by simple operation without performing a complex operation such as inputting the quantity. In contrast, to designate any other order unit, "input quantity" is selected to display another screen for inputting the number of pack products or carton products.

By pressing the order confirmation operation section G32, the customer or the salesperson can order a tobacco product of the selected brand in the designated order unit and quantity.

Accordingly, the brand order screen G3 can be referred to as a brand operation display which enables an operation for ordering a tobacco product of a target brand.

If the information acquisition unit 201 acquires a brand ID or a JAN code, the display processing unit 202 can display a state similar to a state in which tobacco products of a brand identified by the brand ID or the JAN code are selected on the brand selection screen described above, that is, can directly display the brand order screen G3 for a tobacco product of the brand on the brand selection screen, without requiring an operation of selecting a desired brand on the brand selection screen.

Further, also when a main smoking brand ID is acquired from the assistant PC 10 (the customer management unit 102) in response to the information acquisition unit 201 sending a customer ID to the assistant PC 10, the display processing unit 202 can directly display the brand order screen G3 for a tobacco product of a brand identified by the main smoking brand ID on the brand selection screen in a way similar to that described above.

This allows the customer to easily order a tobacco product of the desired brand by causing the customer mobile terminal to communicate with the order terminal 20, causing the order terminal 20 to capture an image of their own biometric information, or causing the order terminal 20 to capture an image of a two-dimensional code displayed on the mobile terminal, without performing an operation of searching for a tobacco product of the desired brand among tobacco products of a plurality of brands.

Alternatively, in response to a plurality of main smoking brand IDs being acquired from the assistant PC 10 (the customer management unit 102), the display processing unit 202 may directly display a collective brand order screen on the brand selection screen such that tobacco products of a plurality of brands identified by the plurality of main smoking brand IDs can be ordered collectively.

For example, the collective brand order screen is separated into areas, each for a corresponding one of a plurality of brands of tobacco products, each area including brand information and an order unit designating section. The collective brand order screen can further be formed to include an order confirmation operation section and an order cancellation operation section.

The customer or salesperson presses the order confirmation operation section after designating an order unit for tobacco products of one or more brands (or all brands) that they wish to order among tobacco products of a plurality of brands displayed on the collective brand order screen, thereby being able to order tobacco products of the one or more brands, for which the order unit is designated, in the designated order unit and quantity.

If main-smoking-brand-unspecified information is acquired from the assistant PC 10 (the customer management unit 102), it is desirable that the display processing unit 202 display the brand selection screen.

As described below, when ordered brand information is sent from the order receiving unit 203 to the assistant PC 10 in response to an operation of pressing the order confirmation operation section G32, the display processing unit 202 cancels the brand order screen and determines whether to display tobacco-product-related information on the basis of the main smoking brand ID and the display designation type and the like sent from the assistant PC 10.

Specifically, if the display designation type is the OK type or the PRCP type, the display processing unit 202 determines whether the brand ordered on the brand order screen is the target of a giveaway or campaign. If the ordered brand is the target of a giveaway or campaign, the display processing unit 202 displays a summary of giveaway information or campaign information.

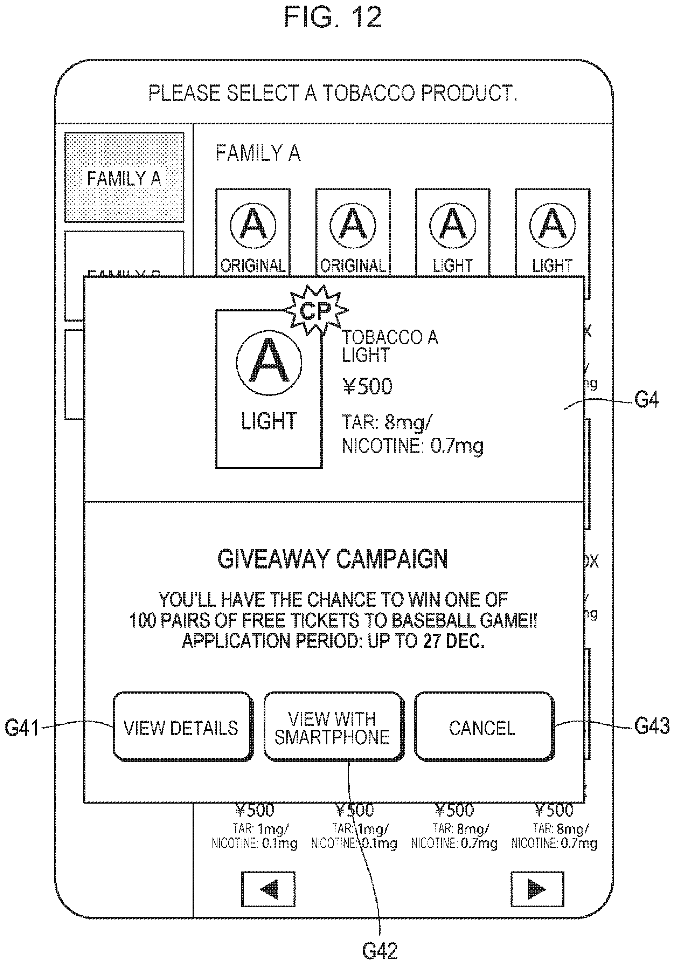

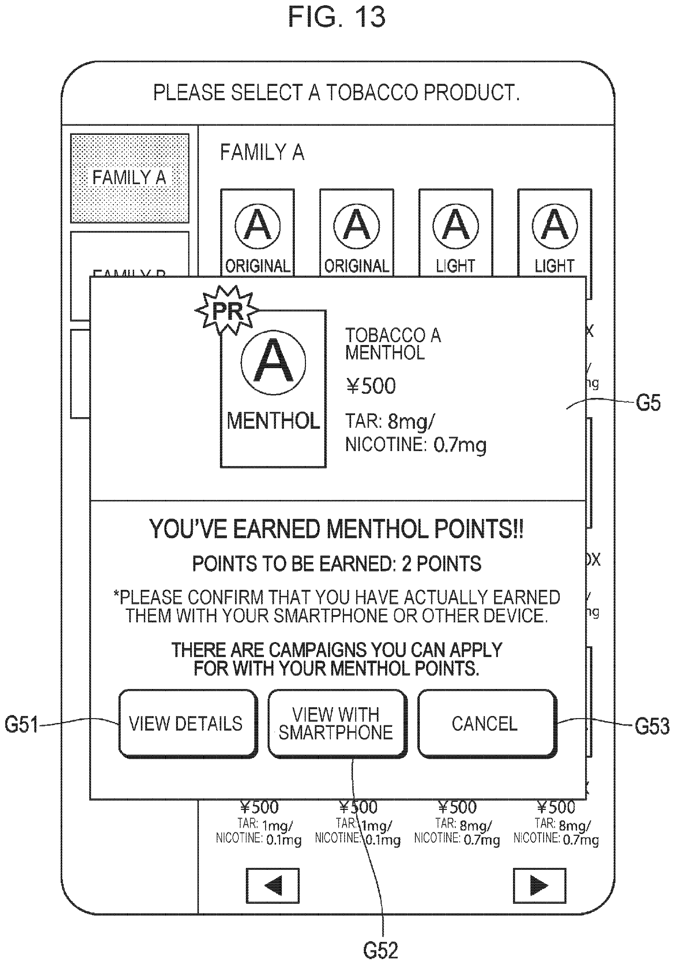

Fig. 12 is a diagram illustrating an example campaign summary screen, and Fig. 13 is a diagram illustrating an example giveaway summary screen.

As illustrated in Fig. 12, a campaign summary screen G4 includes a summary (overview) of campaign information in addition to brand information of the ordered brand, and also includes a details designating section G41, a transfer designating section G42, and a cancellation designating section G43. The example in Fig. 12 illustrates a summary of the campaign information, namely, information on the privilege "pairs of free tickets to baseball game", the number of winners "100", and the application period "27 Dec.".

As illustrated in Fig. 13, a giveaway summary screen G5 includes a summary (overview) of giveaway information in addition to brand information of the ordered brand, and also includes a details designating section G51, a transfer designating section G52, and a cancellation designating section G53. The example in Fig. 13 illustrates a summary of the giveaway information, namely, the points to be earned "2 points" serving as the privilege, and further presents the presence of a campaign for the points.

Upon detection of an operation of pressing the cancellation designating section G43 of the campaign summary screen G4 or the cancellation designating section G53 of the giveaway summary screen G5, the display processing unit 202 cancels the campaign summary screen G4 or the giveaway summary screen G5.

Upon detection of an operation of pressing the transfer designating section G42 of the campaign summary screen G4 or the transfer designating section G52 of the giveaway summary screen G5, the display processing unit 202 transmits transfer instruction information to the assistant PC 10. For example, the transfer instruction information includes either the brand ID of the ordered brand or the customer ID, or both. Accordingly, as described above, the customer management unit 102 executes a process for transferring the related information to the customer mobile terminal.

In contrast, upon detection of an operation of pressing the details designating section G41 of the campaign summary screen G4 or the details designating section G51 of the giveaway summary screen G5, the display processing unit 202 displays details of the giveaway information or the campaign information. The details of the giveaway information or the campaign information displayed on the order terminal 20 is similar to information transferred to and displayed on the customer mobile terminal in response to the operation of the transfer designating section G42 or G52. Thus, as details will be described below, an operation for applying for the campaign is also enabled on the order terminal 20. Upon detection of an application operation on the order terminal 20, the display processing unit 202 transmits, to the assistant PC 10, information indicating that an application has been entered. The information includes, for example, either the brand ID of the ordered brand or the customer ID, or both.

If the giveaway information indicates a sweepstakes in which the winner is determined on the spot, the giveaway summary screen G5 may show summary information concerning the sweepstakes. Upon detection of an operation of pressing the details designating section G51, a screen for determining the winner may be displayed. In this case, upon detection of an operation of pressing the transfer designating section G52, the determination of the winner of the sweepstakes can be executed on the customer mobile terminal.

If the giveaway information indicates distribution of samples, the giveaway summary screen G5 shows information concerning distribution of samples. In response to the detection of an operation of pressing an "OK" button in the screen G5, the order terminal 20 can send sample distribution information to the fixture management terminal 70 through the assistant PC 10. This allows the salesperson to recognize distribution of samples in accordance with the display on the fixture management terminal 70, and ensures that the salesperson can pass a predetermined sample to the customer.

If the display designation type is the PR type and the brand ordered on the brand order screen is the target of a giveaway, the display processing unit 202 displays a summary of giveaway information as illustrated in Fig. 12. The subsequent processing is as described above.

If the display designation type is the PRCP type or the PR type and the brand ordered on the brand order screen is not the target of a giveaway or campaign, the display processing unit 202 does not display the related information.

If the display designation type is the OK type or the QU type and the brand ordered on the brand order screen is not the target of a giveaway or campaign, the display processing unit 202 determines whether the tobacco-product-related information acquired from the assistant PC 10 includes questionnaire information. If questionnaire information is included, the display processing unit 202 determines whether to display the questionnaire information.

In this determination, the display processing unit 202 may hold in advance information on the time of day when the number of visitors is relatively low, determine that the questionnaire information is displayed at the time, and determine that the questionnaire information is not displayed at other times. Alternatively, the display processing unit 202 may determine whether to display the questionnaire information with a predetermined frequency (for example, once every three times) for the same customer. For example, it is desirable that the number of times the questionnaire information is not displayed be stored in the customer management DB 105 in association with a customer ID and that the questionnaire information be determined to be displayed when the number of times reaches a predetermined value. Alternatively, when the questionnaire information is included in the tobacco-product-related information, the display processing unit 202 may always determine that the questionnaire information is displayed.

Alternatively, the display processing unit 202 may switch the type of questionnaire information (pattern of questions) to be displayed depending on whether the customer ID has been acquired at this time. For example, if the customer ID has been acquired, questionnaire information (pattern of questions) of a type associated with the customer ID or associated with a flag indicating that the customer ID has been acquired is displayed. If the customer ID has not been acquired, questionnaire information of a type associated with a flag indicating that the customer ID has not been acquired is displayed. Accordingly, questions can be changed for customers who have registered their customer IDs and those who have not, and statistical information specific to each customer can be obtained.

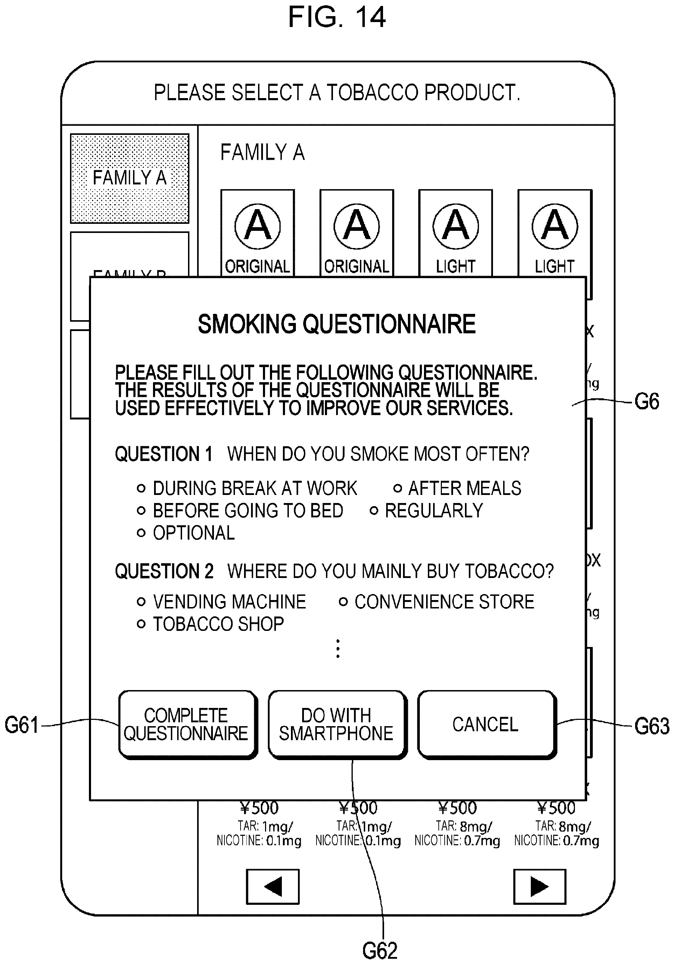

If the questionnaire information is determined to be displayed, the display processing unit 202 displays a questionnaire screen G6 illustrated in Fig. 14.

Fig. 14 is a diagram illustrating an example questionnaire screen.

The questionnaire screen G6 includes one or more questions for the customer such that an operation of inputting an answer to each question is enabled. The questionnaire screen G6 further includes an answer completion designating section G61, a transfer designating section G62, and a cancellation designating section G63. Upon detection of an operation of pressing the cancellation designating section G63, the display processing unit 202 cancels the questionnaire screen G6.

Upon detection of an operation of pressing the answer completion designating section G61, the display processing unit 202 generates questionnaire answer information including information on answers to the respective questions, which are entered on the questionnaire screen G6, and transmits the questionnaire answer information to the assistant PC 10. However, the display processing unit 202 may transmit the questionnaire answer information to the assistant PC 10 after a screen for confirming the answers to the respective questions is displayed.

In contrast, upon detection of an operation of pressing the transfer designating section G62, the display processing unit 202 transmits transfer instruction information to the assistant PC 10. For example, the transfer instruction information includes the customer ID and information that can identify the questionnaire information. Accordingly, as described above, the customer management unit 102 executes a process for transferring the questionnaire information to the customer mobile terminal.

If the display designation type is the QU type and the brand ordered on the brand order screen is the target of a giveaway or campaign, none of giveaway information and campaign information is displayed, but questionnaire information can be displayed.

In this embodiment, furthermore, if giveaway information or campaign information is displayed, the display processing unit 202 does not display questionnaire information thereafter. If the ordered brand is the target of both a giveaway and a campaign, the display processing unit 202 may display only either giveaway information or campaign information depending on the display designation type. For example, if the display designation type is the PR type, only giveaway information is displayed. If the display designation type is the PRCP type, only either giveaway information or campaign information is displayed.

This can prevent a customer from staying in front of the order terminal 20 for a long time and reduce the loss of payment time at the cash register counter. However, if the display designation type is the PRCP type, summaries of both giveaway information and campaign information may be displayed.

As described above, the display processing unit 202 determines, based on the display designation type corresponding to the acquired customer ID, whether to display related information (giveaway information, campaign information, or questionnaire information) on the order terminal 20, and the content of the related information to be displayed on the order terminal 20 (i.e., giveaway information, campaign information, or questionnaire information).

As described below, the display designation type can be set and changed by operation of the customer mobile terminal. Thus, setting the display designation type in advance allows the customer to adjust the display of related information on the order terminal 20, as appropriate, when ordering a tobacco product using the order terminal 20.

In addition, the display processing unit 202 can select at least one of questionnaire information, giveaway information, and campaign information from among pieces of tobacco-product-related master information sent from the assistant PC 10 as related information to be displayed on the order terminal 20.

Upon detection of an operation of pressing the order confirmation operation section G32 or G42 of the brand order screen G3, the order receiving unit 203 identifies the brand ID of the selected tobacco product, the order unit ID indicating a pack product or a carton product, or both, and the quantity.

The order receiving unit 203 sends ordered brand information including the identified brand ID, order unit ID indicating a pack product or a carton product, or both, and quantity to the assistant PC 10. The ordered brand information is acquired by the fixture assistance unit 101 of the assistant PC 10, and the pack fixture 50 or the carton fixture 60 is controlled.

In contrast, upon the order cancellation operation section G33 of the brand order screen G3 being pressed, the brand order screen G3 is canceled, and the selected brand, quantity, and the like are cleared.

### [Customer Mobile Terminal]

The customer mobile terminal is a computer carried by a customer and having a communication function. Examples of the customer mobile terminal include a mobile phone such as a smartphone, a tablet terminal, and a notebook PC (Personal Computer). The customer mobile terminal capable of receiving services from the subject system 1 is a terminal having installed therein a dedicated application such that the operation of the application implements the various functions described above.

The customer mobile terminal can have a function of allowing the order terminal 20 to acquire a customer ID. For example, as described above, the customer mobile terminal may transmit a customer ID to the order terminal 20 via short-range wireless communication or the like, or may display a two-dimensional code, in which the customer ID is encoded, in a manner readable to the order terminal 20.

Further, the customer mobile terminal can have a function capable of setting and changing a display designation type stored in the customer management DB 105. For example, the customer mobile terminal displays a screen for selecting any one of display designation types (in this embodiment, the OK type, the PRCP type, the PR type, the QU type, or the NON type), and, in response to the display designation type being changed, transmits the changed display designation type, together with the customer ID, to the assistant PC 10 directly or via another server device. Accordingly, the display designation type of the customer stored in the customer management DB 105 is desirably updated.

As described above, furthermore, the customer mobile terminal can have a function of displaying tobacco-product-related information to be transmitted via the assistant PC 10 and enabling a related operation. Specifically, as described above, details of giveaway information, details of campaign information, or questionnaire information is displayed.

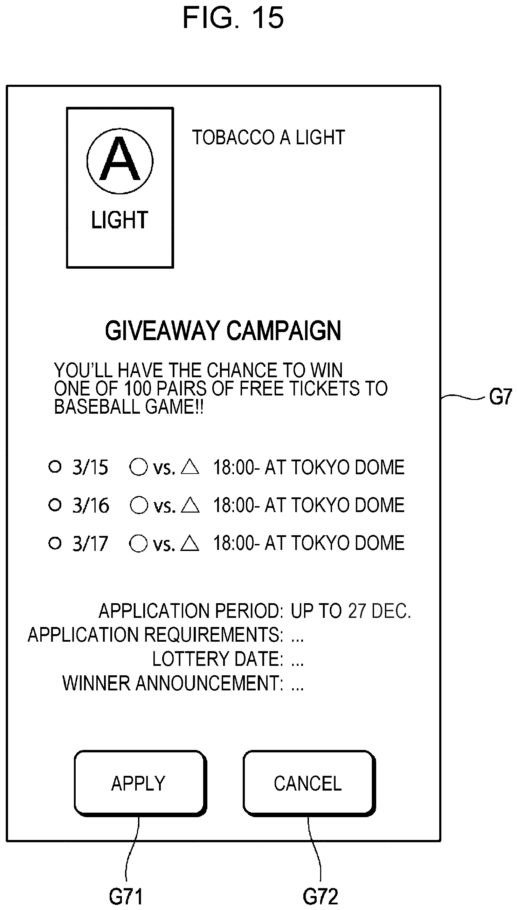

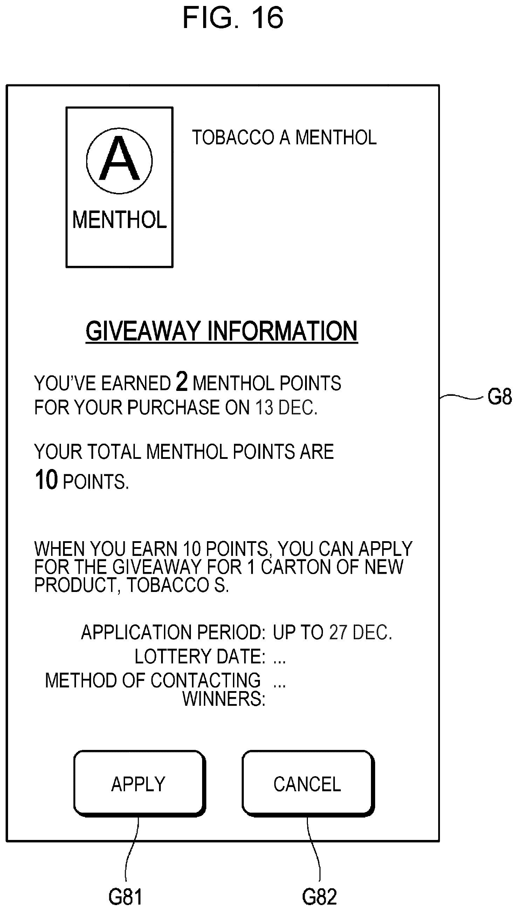

Fig. 15 is a diagram illustrating an example campaign information screen displayed on a customer mobile terminal, and Fig. 16 is a diagram illustrating an example giveaway information screen displayed on the customer mobile terminal.

As illustrated in Fig. 15, a campaign information screen G7 includes details of campaign information in addition to brand information of the ordered brand, and also includes an application designating section G71 and a cancellation designating section G72. The example in Fig. 15 illustrates details of campaign information, namely, in addition to the summary of the campaign information illustrated in Fig. 12 (information on the privilege "pairs of free tickets to baseball game", the number of winners "100", and the application period "27 Dec."), detailed information of the privilege (such as date and time, and place), application requirements, lottery date, winner announcement, and so on.

As illustrated in Fig. 16, a giveaway information screen G8 includes details of giveaway information in addition to brand information of the ordered brand, and also includes an application designating section G81 and a cancellation designating section G82. The example in Fig. 16 illustrates details of giveaway information, namely, in addition to the summary of the giveaway information illustrated in Fig. 13, total point information, details of campaign information for which people can apply with the points, and so on.

Upon detection of an operation of pressing the cancellation designating section G72 of the campaign information screen G7 or the cancellation designating section G82 of the giveaway information screen G8, the campaign information screen G7 or the giveaway information screen G8 is canceled.

Upon detection of an operation of pressing the application designating section G71 of the campaign information screen G7 or the application designating section G81 of the giveaway information screen G8, the customer mobile terminal transmits application information for the target campaign to the external sales promotion assistance server device. The application information is similar to the application information generated by the customer management unit 102 described above. In this manner, on the giveaway information screen G8, an operation for applying for a related campaign is also enabled.

The campaign information screen G7 and the giveaway information screen G8 described above are similar to the detailed display of the giveaway information or the campaign information, which is displayed on the order terminal 20 in response to the detection of an operation of pressing the details designating section G41 of the campaign summary screen G4 or the details designating section G51 of the giveaway summary screen G5. Accordingly, campaign information or giveaway information is also displayed on the order terminal 20, and an application for the target campaign is enabled by an operation of pressing the application designating section G71 or G81.

In addition, in response to an operation of pressing the transfer designating section G62 of the questionnaire screen G6 displayed on the order terminal 20, the customer mobile terminal can output a questionnaire information screen similar to the questionnaire screen G6.

In this embodiment, as described above, upon detection of a specified operation (operation of pressing a transfer designating section) on the campaign summary screen G4, the giveaway summary screen G5, or the questionnaire screen G6 displayed on the order terminal 20, details of campaign information or giveaway information, or questionnaire information is displayed on the customer mobile terminal. Consequently, the customer can check such tobacco-product-related information on the customer mobile terminal and can apply for the campaign or answer the questionnaire.

This enables sales promotion of tobacco products while reducing the time spent by a customer in front of the order terminal 20.

### [Example Operation of Assistant PC 10]

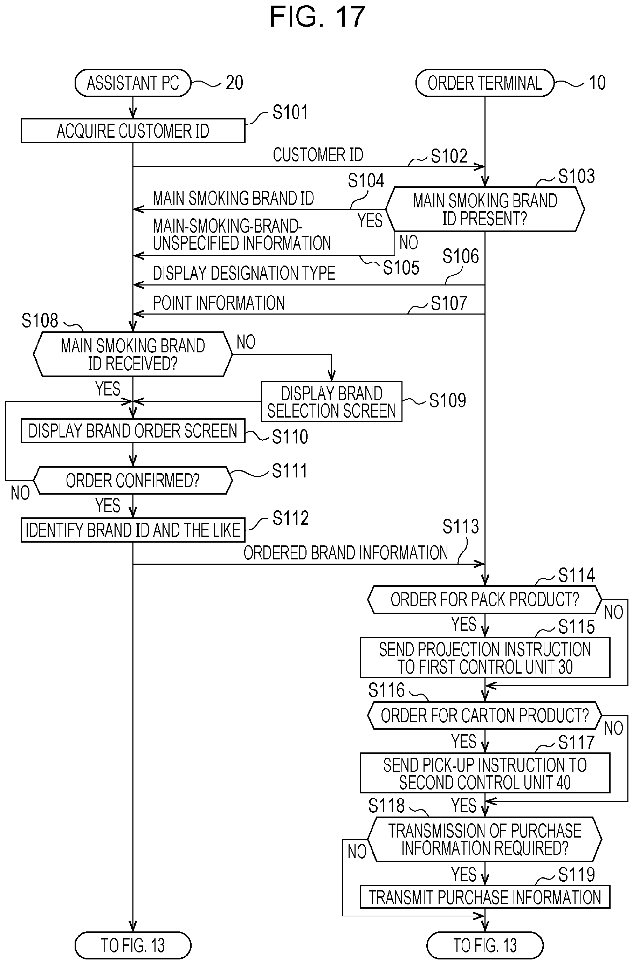

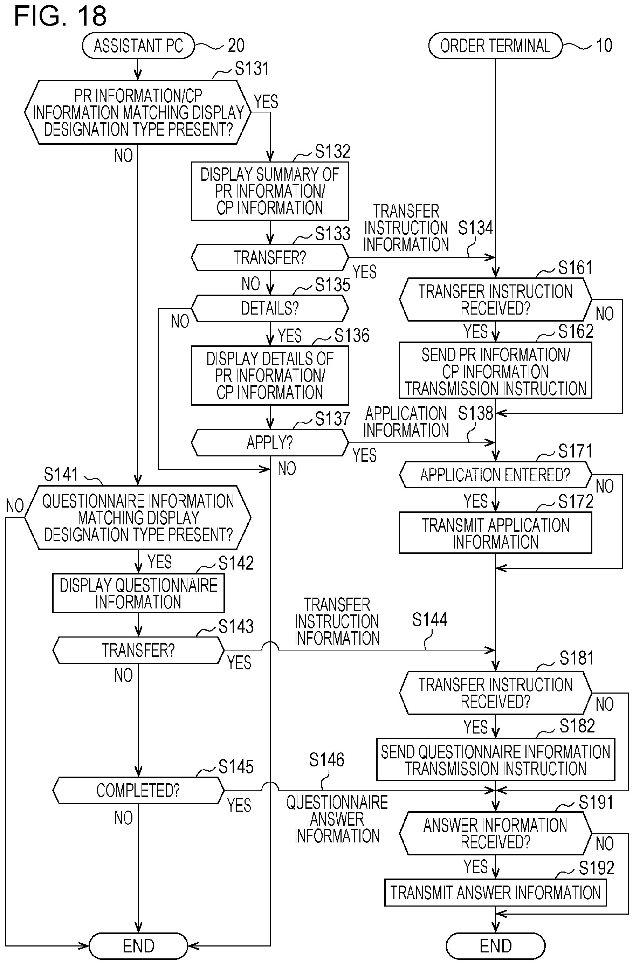

Next, an example operation of the subject system 1 will be described. In particular, an example operation of the assistant PC 10 and the order terminal 20 when a tobacco product is ordered using the order terminal 20 will be described with reference to Fig. 17 and Fig. 18. Fig. 17 is a sequence chart illustrating an example operation related to ordering and picking up of a tobacco product in the subject system 1, and Fig. 18 is a sequence chart illustrating an example operation related to display of tobacco-product-related information after a tobacco product is ordered in the subject system 1.

It is assumed here that in response to a customer holding their own mobile terminal over the order terminal 20, a customer ID is sent from the mobile terminal to the order terminal 20 via wireless communication.

The order terminal 20 (the information acquisition unit 201) acquires a customer ID from the mobile terminal of the customer via wireless communication (S101). The order terminal 20 sends the acquired customer ID to the assistant PC 10 (S102).

If the customer ID is received from the order terminal 20, the assistant PC 10 (the customer management unit 102) searches the customer management DB 105 for the customer ID and determines whether a main smoking brand ID is associated with the customer ID (S103). If a main smoking brand ID is associated with the customer ID (S103; YES), the assistant PC 10 returns the main smoking brand ID to the order terminal 20 (S 104). If no main smoking brand ID is associated with the customer ID (S103; NO), the assistant PC 10 transmits main-smoking-brand-unspecified information to the order terminal 20 (S105).

Further, the assistant PC 10 (the customer management unit 102) extracts a display designation type and point information associated with the customer ID from the customer management DB 105 and transmits them to the order terminal 20 (S106 and S107).

If the main smoking brand ID is received from the assistant PC 10 (S108; YES), the order terminal 20 (the display processing unit 202) displays the brand order screen G3 for a tobacco product of a brand identified by the main smoking brand ID on the brand selection screen without requiring an operation of selecting a desired brand on the brand selection screen (S110).

On the other hand, if the main-smoking-brand-unspecified information is received from the assistant PC 10 (S108; NO), the order terminal 20 (the display processing unit 202) displays a brand selection screen (S109). In response to an operation of pressing an image portion representing the desired brand on the brand selection screen, the order terminal 20 displays the brand order screen G3 for a tobacco product of the brand in pop-up window (S110).

On the brand order screen G3, either the order quantity of pack products or the order quantity of carton products, or both order units are designated, and the order confirmation operation section G32 is pressed (S111).

In response to an operation of pressing the order cancellation operation section G33 on the brand order screen displayed upon receipt of the main smoking brand ID from the assistant PC 10, the brand order screen is canceled, and a brand selection screen is displayed (S109), although not illustrated in Fig. 12.

Upon detection of an operation of the order confirmation operation section G32, the order terminal 20 (the order receiving unit 203) identifies the brand ID of the selected tobacco product, the order unit ID indicating a pack product or a carton product, or both, and the quantity (S112).

At this time, the identified brand ID may be the main smoking brand ID itself transmitted in (S104), or may be different from the main smoking brand ID. The latter case is, for example, a case where the order cancellation operation section G33 is operated on a brand order screen displayed for a tobacco product of a main smoking brand and the order confirmation operation section G32 is operated on a brand order screen displayed in response to a tobacco product of another brand being selected on the brand selection screen.

The order terminal 20 (the order receiving unit 203) sends ordered brand information including the identified brand ID, order unit ID indicating a pack product or a carton product, or both, and quantity to the assistant PC 10 (S113).

Upon detection of an operation of the order confirmation operation section G32, the brand order screen is canceled.

Upon receipt of the ordered brand information from the order terminal 20, the assistant PC 10 (the fixture assistance unit 101) determines, based on the order unit ID included in the ordered brand information, whether the order unit includes a pack product (S114). If a pack product is included (S114; YES), the assistant PC 10 (the fixture assistance unit 101) sends a projection instruction to the first control unit 30 (S115). At this time, the assistant PC 10 (the fixture assistance unit 101) extracts, based on the brand ID of the ordered brand included in the ordered brand information, the position information of a magazine 513 corresponding to the brand ID from the pack fixture management information included in the fixture setting information in the store DB 106 such that the projection instruction includes the position information and the quantity included in the ordered brand information.

Accordingly, the first control unit 30 (the projection control unit 31) controls projection of the projector 56 of the pack fixture 50 in accordance with the projection instruction, and a pick-up notification display providing a notification of the position of a magazine 513 that accommodates pack products of the brand identified by the brand ID is output.

On the other hand, the assistant PC 10 (the fixture assistance unit 101) determines whether the order unit includes a carton product (S116), and if the order unit includes a carton product (S116; YES), the assistant PC 10 (the fixture assistance unit 101) sends a pick-up instruction to the second control unit 40 (S117). At this time, the assistant PC 10 (the fixture assistance unit 101) extracts, based on the brand ID of the ordered brand included in the ordered brand information, the position information of an accommodation area corresponding to the brand ID from the carton fixture management information included in the fixture setting information in the store DB 106 such that the pick-up instruction includes the position information and the quantity included in the ordered brand information.

Accordingly, the second control unit 40 (the position notification processing unit 41) turns on a carton location notification LED 62 corresponding to the position information in accordance with the position information included in the pick-up instruction.

Further, the assistant PC 10 (the customer management unit 102) checks, based on the tobacco-product-related master information stored in the store DB 106, the presence or absence of giveaway information or campaign information for which privilege granting requirements include a purchase of a tobacco product of the ordered brand indicated by the ordered brand information (S118). If giveaway information or campaign information for which privilege granting requirements include a purchase of a tobacco product of the ordered brand is present (S118; YES), the assistant PC 10 (the customer management unit 102) transmits, together with the customer ID, a purchase of a tobacco product of the ordered brand (purchase information) to the external sales promotion assistance server device (S119). Consequently, in the sales promotion assistance server device, the customer ID is associated with information corresponding to the privilege (for example, point information).

After the ordered brand information is transmitted to the assistant PC 10 (S 113), the order terminal 20 (the display processing unit 202) performs processing for display of tobacco-product-related information on the basis of the display designation type acquired in (S 106). Although not illustrated, if the display designation type is the NON type, the operation flow illustrated in Fig. 18 is not executed. Further, if the display designation type is the QU type, (S131) is not executed, but (S141) is executed.

The order terminal 20 (the display processing unit 202) determines the presence or absence of giveaway information or campaign information that matches the acquired display designation type (S131). In this embodiment, if the display designation type is the OK type or the PRCP type, it is determined whether the ordered brand indicated by the ordered brand information is the target of a giveaway or campaign. If the display designation type is the PR type, it is determined whether the ordered brand is the target of a giveaway. The determination as to whether the tobacco-product-related master information previously acquired from the assistant PC 10 and held includes giveaway information or campaign information associated with the brand ID of the ordered brand can be performed to determine whether the ordered brand is the target of a giveaway or campaign.

If giveaway information or campaign information that matches the display designation type is present (S131; YES), the order terminal 20 (the display processing unit 202) displays a summary of giveaway information or campaign information (the campaign summary screen G4 in Fig. 12 or the giveaway summary screen G5 in Fig. 13) (S132). If an operation of pressing the transfer designating section G42 of the campaign summary screen G4 or the transfer designating section G52 of the giveaway summary screen G5 is detected (S133; YES), the display processing unit 202 transmits transfer instruction information to the assistant PC 10 (S134), and cancels the display of the summary.

If the transfer instruction information is received (S161; YES), the assistant PC 10 (the customer management unit 102) instructs the external sales promotion assistance server device to transmit details of the giveaway information or the campaign information including the customer ID acquired in (S102) and the brand ID of the ordered brand included in the ordered brand information acquired in (S113) to the customer mobile terminal corresponding to the customer ID (S162). Accordingly, upon receipt of this instruction, the sales promotion assistance server device transmits the giveaway information or campaign information associated with the brand ID to the customer mobile terminal corresponding to the customer ID, and the customer mobile terminal displays the campaign information screen G7 illustrated in Fig. 15 or the giveaway information screen G8 illustrated in Fig. 16.

If an operation of pressing the details designating section G41 of the campaign summary screen G4 or the details designating section G51 of the giveaway summary screen G5 is detected (S135; YES), the order terminal 20 (the display processing unit 202) cancels the display of the summary described above and then displays details of the giveaway information or the campaign information (S136). The details of the giveaway information or the campaign information displayed on the order terminal 20 are similar to information displayed on the customer mobile terminal in accordance with the instruction given in (S162).

The detailed display of the giveaway information or the campaign information displayed on the order terminal 20 includes an operation button similar to the application designating section G71 of the campaign information screen G7 or the application designating section G81 of the giveaway information screen G8. If an operation of pressing such an application designating section is detected on the order terminal 20 (S137; YES), the order terminal 20 (the display processing unit 202) transmits, to the assistant PC 10, information indicating that an application has been entered (S138).

After the transmission (S138), the order terminal 20 (the display processing unit 202) cancels the detailed display of the giveaway information or the campaign information. The detailed display is also canceled when an operation of pressing a cancellation designating section in the detailed display of the giveaway information or the campaign information is detected.

If information indicating that an application has been entered is received (S171; YES), the assistant PC 10 (the customer management unit 102) generates application information of the target campaign and transmits the application information to the external sales promotion assistance server device (S172).

If giveaway information or campaign information that matches the display designation type is not present (S131; NO) or if the display designation type is the QU type, the order terminal 20 (the display processing unit 202) determines the presence or absence of questionnaire information that matches the display designation type (S141).

In this determination (S 141), if the display designation type is the PRCP type or the PR type and the brand ordered on the brand order screen is not the target of a giveaway or campaign, it is determined that the questionnaire information does not match the display designation type (S141; NO), and the related information is not displayed. In this determination, if the display designation type is the OK type or the QU type and the tobacco-product-related master information previously acquired from the assistant PC 10 does not include questionnaire information, it is determined that questionnaire information that matches the display designation type is not present (S141; NO).

On the other hand, if the display designation type is the OK type, the brand ordered on the brand order screen is not the target of a giveaway or campaign (S 131; NO), and the tobacco-product-related master information includes questionnaire information, or if the display designation type is the QU type and the tobacco-product-related master information includes questionnaire information, it is determined that questionnaire information that matches the display designation type is present (S141; YES).

If it is determined that questionnaire information that matches the display designation type is present (S141; YES), the order terminal 20 (the display processing unit 202) displays questionnaire information like the questionnaire screen G6 illustrated in Fig. 14 (S 142). In this embodiment, as described above, the order terminal 20 (the display processing unit 202) determines whether to display questionnaire information under a certain condition, and displays questionnaire information only when the questionnaire information is determined to be displayed (S 142).

Then, if an operation of pressing the transfer designating section G62 of the questionnaire screen G6 is detected (S143; YES), the order terminal 20 (the display processing unit 202) transmits transfer instruction information to the assistant PC 10 (S144), and then cancels the display of the questionnaire.

If the transfer instruction information is received (S181; YES), the assistant PC 10 (the customer management unit 102) sends a questionnaire information transmission instruction including the customer ID acquired in (S102) and information identifying the questionnaire information included in the transfer instruction information to the external sales promotion assistance server device (S182). Accordingly, upon receipt of this instruction, the sales promotion assistance server device transmits questionnaire information identified by the identification information to the customer mobile terminal corresponding to the customer ID, and the customer mobile terminal displays the questionnaire information in such a manner that an input operation can be performed on the questionnaire information.

If an operation of pressing the answer completion designating section G61 of the questionnaire screen G6 is detected (S145; YES), the order terminal 20 (the display processing unit 202) generates questionnaire answer information including information on answers to the respective questions input on the questionnaire screen G6, and transmits the questionnaire answer information to the assistant PC 10 (S146). At this time, the order terminal 20 (the display processing unit 202) cancels the display of the questionnaire.

If the questionnaire answer information is received (S191; YES), the assistant PC 10 (the customer management unit 102) transmits, together with the customer ID, the questionnaire answer information to the external sales promotion assistance server device (S192).

In this embodiment, as described above, after ordered brand information is transmitted from the order terminal 20 to the assistant PC 10 (S113), giveaway information, campaign information, or questionnaire information, that is, tobacco-product-related information, is displayed on the order terminal 20. That is, the display processing unit 202 can be identified as, after an operation for ordering a tobacco product of a target brand on the brand order screen (brand operation display) is received by the order terminal 20, causing the order terminal 20 to display tobacco-product-related information (giveaway information, campaign information, or questionnaire information) including information that promotes a specified operation (operation of pressing the transfer designating section G42, G52, or G62). Thus, after the detection of an operation of pressing the order confirmation operation section G32 on the brand order screen G3 (S111), the campaign summary screen G4, the giveaway summary screen G5, and the questionnaire screen G6 may be displayed before ordered brand information is transmitted from the order terminal 20 to the assistant PC 10.

In this manner, after an operation for ordering a tobacco product of a target brand is received by the order terminal 20, tobacco-product-related information (giveaway information, campaign information, or questionnaire information) is displayed on the order terminal 20, thus making the related information visible to the customer until the salesperson takes a tobacco product of the ordered brand in hand after the customer places an order.

In this embodiment, furthermore, after ordered brand information is transmitted from the order terminal 20 to the assistant PC 10 (S113), giveaway information, campaign information, or questionnaire information, that is, tobacco-product-related information, can be displayed on the customer mobile terminal. That is, the assistant PC 10 (the customer management unit 102) can be identified as, after an operation for ordering a tobacco product of a target brand on the brand order screen (brand operation display) is received by the order terminal 20, performing processing such that the customer mobile terminal can acquire tobacco-product-related information (giveaway information, campaign information, or questionnaire information).

Accordingly, after ordering a tobacco product of a desired brand using the order terminal 20, the customer is able to view the tobacco-product-related information on the customer mobile terminal at the desired timing.

### [Modifications]

The embodiment described above is illustrative, and the content described above may be modified as necessary without departing from the gist thereof.

For example, in the embodiment described above, the first control unit 30 that controls the pack fixture 50 and the second control unit 40 that controls the carton fixture 60 are disposed separately. However, a single control unit that controls both the pack fixture 50 and the carton fixture 60 may be used instead. In addition, the assistant PC 10 and a control unit therefor may also be implemented as a single control device.

The pack fixture 50 and the carton fixture 60 are not limited to the configurations described above.

The pack fixture 50 may not be implemented in a manner that uses a projection image of the projector 56, as in the embodiment described above, but may be configured such that each of the magazines 513 is provided with an electronic shelf label tag and the electronic shelf label tag of a magazine 513 accommodating tobacco products of a target brand is displayed in a different manner from that for the other magazines 513 to perform a pick-up notification display or a replenishment notification display.

Alternatively, the pack fixture 50 may include LEDs (position indicating means) that provide a notification of the positions of the individual magazines 513, and an LED corresponding to the position of a magazine 513 accommodating tobacco products of a target brand is turned on to perform a pick-up notification display or a replenishment notification display.

Alternatively, the pack fixture 50 and the carton fixture 60 may be devices each having an automatic dispensing function.

In the embodiment described above, furthermore, fixture setting information, such as a correspondence relationship between the position of a magazine in the pack fixture 50 and a brand ID of a brand of pack products accommodated in the magazine and a correspondence relationship between the position of an accommodation area in the carton fixture 60 and a brand ID of a brand of carton products accommodated in the accommodation area, is managed by the assistant PC 10. Alternatively, the fixture setting information may be shared among the first control unit 30, the second control unit 40, and the assistant PC 10, or may be managed by the first control unit 30 and the second control unit 40.

In this manner, the customer management DB 105 and the customer management DB 105 stored in the assistant PC 10 may be stored in any device in the subject system 1, and, furthermore, may be stored in a device outside the subject system 1 if the customer management DB 105 is capable of communicating with the assistant PC 10.

For example, the customer management DB 105 may be disposed in an external server device capable of communicating with the assistant PC 10.

Further, the mobile terminal of the customer may store a customer ID, a main smoking brand ID, a display designation type, and point information, and these may be managed by an application installed in the mobile terminal. In this case, the order terminal 20 is capable of acquiring a customer ID, a main smoking brand ID, a display designation type, and point information directly from the mobile terminal. Thus, in the sequence chart in Fig. 17, (S 102), (S 103), (S 104), (S 105), (S 106), and (S107) are no longer necessary.

For example, the application of the mobile terminal of the customer causes a display unit of the mobile terminal to display a two-dimensional code in which a main smoking brand ID and a customer ID are encoded, and causes the order terminal 20 to read the two-dimensional code, thereby allowing the order terminal 20 to acquire the customer ID and the main smoking brand ID in a collective manner. Accordingly, at least (S102), (S 103), (S 104), and (S105) in Fig. 17 are no longer necessary.

In this manner, by causing the order terminal 20 to acquire a customer ID, the subject system 1 can hold purchase history information of tobacco products for each customer, and therefore, an external server device can accumulate tobacco product purchase history information for each customer in a plurality of stores. By using the accumulated tobacco product purchase history information, the external sales promotion assistance server device can provide promotional information, such as coupons or privileges, to the assistant PC 10 or the customer mobile terminal as tobacco-product-related information according to the tastes of each customer.

In the embodiment described above, furthermore, the assistant PC 10 provides an instruction to transmit the target related information to the customer mobile terminal. However, the order terminal 20 may transmit the related information directly to the customer mobile terminal. In this case, in the sequence chart in Fig. 18, (S162), (S172), and (S182) are executed not by the assistant PC 10 but by the order terminal 20.

In the embodiment described above, furthermore, giveaway information, campaign information, and questionnaire information are exemplified as tobacco-product-related information. However, the tobacco-product-related information is not limited to such examples.

For example, detailed information (such as brand history information like background of development, manufacturing information, material information, and smoke taste information) related to a tobacco product of each brand may be included in tobacco-product-related master information in such a manner as to be associated with a brand ID. In this case, after canceling the brand order screen G3, the display processing unit 202 can display a screen for displaying detailed information related to the ordered brand associated with the brand ID of the ordered brand in place of the campaign summary screen G4 (see Fig. 12), the giveaway summary screen G5 (see Fig. 13), or the like. This screen desirably includes detailed information of the ordered brand in addition to brand information of the ordered brand, and also includes a transfer designating section (for example, G52 in Fig. 13) and a cancellation designating section (for example, G53 in Fig. 13). In response to the detection of an operation of pressing the transfer designating section, a process for transferring detailed information of the ordered brand to the customer mobile terminal is executed by the customer management unit 102. This allows the customer to view detailed information related to the brand of the ordered tobacco product on the order terminal 20 or view the detailed information on the customer mobile terminal at any time.

If a brand whose packaging (package) or brand name will be changed is present, information on the time of change or the changed brand name or packaging (package) may be included in tobacco-product-related master information in such a manner as to be associated with the brand ID of the brand to be changed. Also in this case, after canceling the brand order screen G3, the display processing unit 202 can display a screen for displaying information on the time of change of the ordered brand or the changed brand name or packaging (package), which is associated with the brand ID of the ordered brand. This screen also desirably includes a transfer designating section (for example, G52 in Fig. 13) and a cancellation designating section (for example, G53 in Fig. 13). In response to the detection of an operation of pressing the transfer designating section, a process for transferring the information concerning the change of the brand to the customer mobile terminal is executed by the customer management unit 102.

Likewise, if a brand that will be discontinued is present, information on the time of discontinuation or an alternative brand that can be replaced with the brand to be discontinued is desirably included in tobacco-product-related master information in such a manner as to be associated with the brand ID of the brand to be discontinued. Also in this case, tobacco-product-related information such as the time of discontinuation is displayed.

Such information ensures that the customer can know information on the change of packaging or the change of the brand name of the brand of the ordered tobacco product, or information on discontinuation schedule of the brand of the ordered tobacco product.

In addition, information concerning a recommended brand, a newly released brand, a well-selling brand, or a brand that is often purchased together may be included in tobacco-product-related master information in such a manner as to be associated with the brand ID of a specific brand. This allows the customer to obtain the information on a recommended brand or the like as another brand different from the brand of the ordered tobacco product by using the order terminal 20 or the customer mobile terminal.

In other words, the customer determines whether to perform a specified operation on the order terminal 20 after viewing such tobacco-product-related information displayed on the order terminal 20, thereby being able to designate whether to transfer the information to their own customer mobile terminal. Consequently, the customer's motivation to view the tobacco-product-related information can be increased compared to the case where the same information is suddenly sent to the customer mobile terminal.

In addition, when a tobacco product of another brand that is recommended in this manner is ordered at the order terminal 20, the customer management unit 102 may generate application information of the target campaign and transmit the application information to the external sales promotion assistance server device.

If the customer ID has not been acquired when a brand selection screen or the brand order screen G3 is displayed, after canceling the brand order screen G3, the display processing unit 202 may display an ID registration guide screen for guiding the customer through registration of a customer ID, in place of the campaign summary screen G4 (see Fig. 12), the giveaway summary screen G5 (see Fig. 13), or the like.

The ID registration guide screen may include URL information of a WEB page for registering a customer ID or destination address information indicating the destination of an electronic mail, or may include a two-dimensional code in which the URL information or destination address information is encoded. The screen may further include a transfer designating section (for example, G52 in Fig. 13) and a cancellation designating section (for example, G53 in Fig. 13). In response to the detection of an operation of pressing the transfer designating section, a process for transferring the URL information or destination address information to the customer mobile terminal may be executed by the customer management unit 102. This allows the customer to perform an operation of registering a customer ID by reading the two-dimensional code displayed on the order terminal 20 using the customer mobile terminal, or to perform an operation of registering a customer ID using the transferred URL information or destination address information.

Alternatively, in response to an operation of the order terminal 20 through the ID registration guide screen, a customer ID may be registered to a server device through the assistant PC 10. For example, a predetermined operation may be performed on the ID registration guide screen to start an imaging device of the order terminal 20 to capture a biometric image such as a face image, a vein image, or a fingerprint image, and biometric information extracted from the biometric image may be registered as a customer ID, or may be registered in association with a separately acquired customer ID. In this case, the customer management unit 102 can extract biometric information from the biometric image acquired from the order terminal 20 and request the external server device to register the biometric information as a customer ID or in association with a customer ID. Furthermore, the customer management unit 102 may send a request for registration of biometric information, generate application information of the target campaign, and transmit the application information to the external sales promotion assistance server device.

The display processing unit 202 may display, in place of or in addition to the ID registration guide screen, an application download guide screen for guiding the customer through the download of a dedicated application into the customer mobile terminal. Alternatively, the order terminal 20 may communicate with the customer mobile terminal via short-range wireless communication or the like to instruct the customer mobile terminal to start a predetermined application (such as a dedicated application or an email application) installed in the customer mobile terminal.

In the embodiment and modifications described above, after ordered brand information is transmitted from the order terminal 20 to the assistant PC 10 or after the brand order screen G3 is canceled, a summary or details of giveaway information, campaign information, or the like, or various information such as questionnaire information, brand details information, brand switching information, and brand discontinuation information is displayed as tobacco-product-related information. However, the display timing of such tobacco-product-related information is not limited to that only in the examples in the embodiment described above.

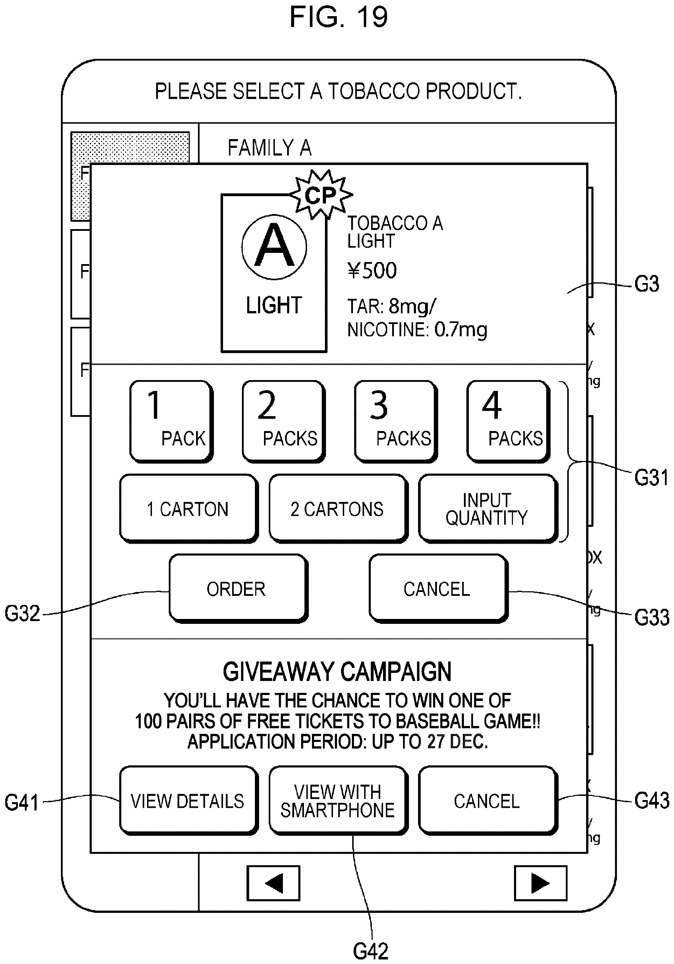

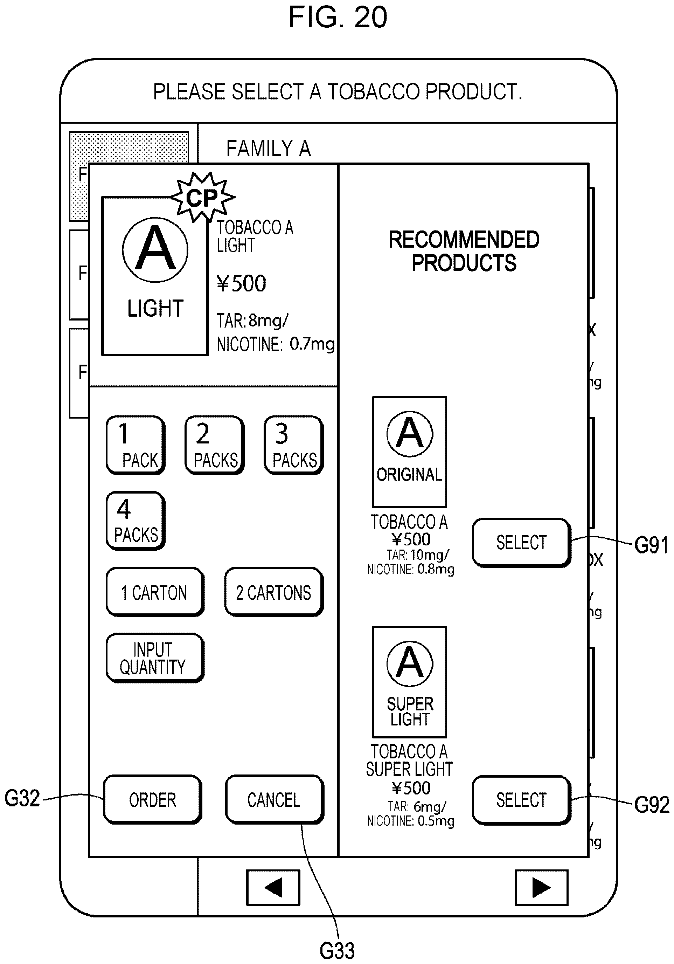

As illustrated in Fig. 19 and Fig. 20, the tobacco-product-related information may be displayed on the order terminal 20 before an order operation is performed, that is, before ordered brand information is transmitted from the order terminal 20 to the assistant PC 10 or before the brand order screen is canceled.

Fig. 19 is a diagram illustrating a first modification of the brand order screen. The brand order screen illustrated in Fig. 19 displays, in addition to the display content of the brand order screen G3 (see Fig. 11) in the embodiment described above, the summary (overview) of the campaign information included in the campaign summary screen G4 (see Fig. 12), and further includes the details designating section G41, the transfer designating section G42, and the cancellation designating section G43. In response to the transfer designating section G42 being pressed on this brand order screen, the display processing unit 202 transmits transfer instruction information to the assistant PC 10 before an order operation is performed. Accordingly, as described above, the customer management unit 102 executes a process for transferring campaign details information (tobacco-product-related information) to the customer mobile terminal.

Fig. 20 is a diagram illustrating a second modification of the brand order screen. The brand order screen illustrated in Fig. 20 displays, in addition to the display content of the brand order screen G3 (see Fig. 11) in the embodiment described above, information concerning a tobacco product of a brand different from the brand to be ordered, as recommended product information. In response to pressing of a selection button G91 or G92 for a brand presented as a recommended product, a brand order screen for a tobacco product of the brand is displayed.

Additionally, the tobacco-product-related information may be sent directly to the customer mobile terminal from the external sales promotion assistance server device. For example, the subject system 1 further includes a transmitter of a specific radio wave (for example, a Bluetooth (registered trademark) signal), such as a beacon terminal, and the customer mobile terminal, the transmitter, and the external sales promotion assistance server device may cooperate with each other to implement the operation described above. Specifically, when a customer enters a store in which the subject system 1 and the transmitter are installed, the mobile terminal of the customer receives a specific radio wave from the transmitter. The application of the customer mobile terminal transmits some information (for example, identification information that can identify the transmitter, identification information of the store, and so on) to the external sales promotion assistance server device in accordance with the reception condition of the specific radio wave. Accordingly, the external sales promotion assistance server device sends tobacco-product-related information concerning a tobacco product, such as promotional information or announcement information, to the customer mobile terminal, and the application displays the tobacco-product-related information on the display unit of the customer mobile terminal. At this time, the external sales promotion assistance server device can also transmit tobacco-product-related information suitable for the store that the customer has entered.

In the sequence chart described above, a plurality of steps (processing operations) are illustrated in order. However, the order in which the steps to be executed in this embodiment are executed is not limited to the illustrated order. In this embodiment, the order of the illustrated steps may be changed so long as the content has no problem.

In addition, part of all of the content of the foregoing description may also be identified as follows. However, the content of the foregoing description is not limited to the following description.

(1) A tobacco product management system including an order terminal capable of displaying brand information of tobacco products of a plurality of brands and capable of receiving an operation for ordering a brand that a customer wishes to order from among the plurality of brands, and an assistant device that assists in picking up a tobacco product of a brand specified through an order operation received by the order terminal, the tobacco product management system including:
   a display processing means for causing a display unit of the order terminal to present a display of first tobacco-product-related information, in addition to a brand operation display which enables the order operation or a designation operation for designating a brand of a tobacco product to be picked up from among the tobacco products of the plurality of brands;
   an identifier acquiring means for acquiring a customer identifier for a customer; and
   an information providing means for, in response to a specified operation being received by the order terminal on which the first tobacco-product-related information is being displayed, performing processing to enable a customer mobile terminal corresponding to the acquired customer identifier to acquire second tobacco-product-related information, wherein
   the second tobacco-product-related information is information that is the same as or related to the first tobacco-product-related information or is related to a tobacco product of the brand specified through the order operation received by the order terminal.
(2) The tobacco product management system according to (1), wherein
   the information providing means performs processing to enable the customer mobile terminal corresponding to the acquired customer identifier to acquire the second tobacco-product-related information after the order operation is received by the order terminal.
(3) The tobacco product management system according to (1) or (2), further including
   a designation holding means for holding display designation information in association with the customer identifier for a customer, the display designation information being generated through an operation of the customer mobile terminal by the customer, wherein
   in response to the customer identifier for a customer being acquired, the display processing means determines whether to display the first tobacco-product-related information on the display unit of the order terminal or determines content of the first tobacco-product-related information to be displayed on the display unit of the order terminal, based on the display designation information associated with the customer identifier.
(4) The tobacco product management system according to any one of (1) to (3), further including
   a master information storage unit that stores tobacco-product-related master information, the tobacco-product-related master information including at least one of questionnaire information including a question for a customer, giveaway information indicating that a customer is granted a privilege, and campaign information indicating that a customer is able to be granted a privilege in accordance with a specific requirement, wherein
   the display processing means selects at least one of the questionnaire information, the giveaway information, and the campaign information from within the tobacco-product-related master information as the first tobacco-product-related information to be displayed on the display unit of the order terminal.
(5) The tobacco product management system according to any one of (1) to (4), wherein
   the display processing means switches, in accordance with whether the customer identifier has been acquired when questionnaire information including questions for a customer is displayed on the display unit of the order terminal as the first tobacco-product-related information, a pattern of the questions in the questionnaire information to be displayed.
(6) The tobacco product management system according to any one of (1) to (5), wherein
   the display processing means causes the display unit of the order terminal to display the first tobacco-product-related information including information that promotes the specified operation, after the order operation is received by the order terminal.
(7)The tobacco product management system according to (4), further including
   a generation means for generating application information indicating that a customer indicated by the acquired customer identifier has entered an application for a campaign that is able to grant a privilege to a customer in accordance with a specific requirement, wherein
   the first tobacco-product-related information is the giveaway information or the campaign information, and
   the generation means generates the application information of the customer in response to a specified operation being performed on the order terminal on which the first tobacco-product-related information is being displayed.
(8) A tobacco product management method performed by a system, the system including an order terminal capable of displaying brand information of tobacco products of a plurality of brands and capable of receiving an operation for ordering a brand that a customer wishes to order from among the plurality of brands, and an assistant device that assists in picking up a tobacco product of a brand specified through an order operation received by the order terminal, the tobacco product management method including:
   causing a display unit of the order terminal to present a display of first tobacco-product-related information, in addition to a brand operation display which enables the order operation or a designation operation for designating a brand of a tobacco product to be picked up from among the tobacco products of the plurality of brands;
   acquiring a customer identifier for a customer; and
   performing, in response to a specified operation being received by the order terminal on which the first tobacco-product-related information is being displayed, an information providing process to enable a customer mobile terminal corresponding to the acquired customer identifier to acquire second tobacco-product-related information, wherein
   the second tobacco-product-related information is information that is the same as or related to the first tobacco-product-related information or is related to a tobacco product of the brand specified through the order operation received by the order terminal.
(9) The tobacco product management method according to (8), wherein
   the information providing process is performed after an operation of designating a tobacco product of a target brand in response to the brand operation display is received by the order terminal.
(10) The tobacco product management method according to (8) or (9), further including
   in response to the customer identifier for a customer being acquired, determining whether to display the first tobacco-product-related information on the display unit of the order terminal or determining content of the first tobacco-product-related information to be displayed on the display unit of the order terminal, based on display designation information associated with the customer identifier, wherein
   the display designation information is generated through an operation of the customer mobile terminal by the customer, and is held in association with the customer identifier for the customer.
(11) The tobacco product management method according to any one of (8) to (10), further including
   selecting, as the first tobacco-product-related information to be displayed on the display unit of the order terminal, at least one of questionnaire information, giveaway information, and campaign information from within tobacco-product-related master information, wherein
   the tobacco-product-related master information is stored in a master information storage unit in such a manner that the tobacco-product-related master information includes at least one of questionnaire information, giveaway information, and campaign information,
   the questionnaire information includes a question for a customer,
   the giveaway information indicates that a customer is granted a privilege, and
   the campaign information indicates that a customer is able to be granted a privilege in accordance with a specific requirement.
(12) The tobacco product management method according to any one of (8) to (11), further including
   switching, in accordance with whether the customer identifier has been acquired when questionnaire information including questions for a customer is displayed on the display unit of the order terminal as the first tobacco-product-related information, a pattern of the questions in the questionnaire information to be displayed.
(13) The tobacco product management method according to any one of (8) to (12), wherein
   the first tobacco-product-related information includes information that promotes the specified operation, and is displayed on the display unit of the order terminal after an operation of designating a tobacco product of a target brand in response to the brand operation display is received by the order terminal.
(14) The tobacco product management method according to (11), further including
   generating application information indicating that a customer indicated by the acquired customer identifier has entered an application for a campaign that is able to grant a privilege to a customer in accordance with a specific requirement, wherein the first tobacco-product-related information is the giveaway information or the campaign information, and
   the application information is generated in response to a specified operation being performed on the order terminal on which the first tobacco-product-related information is being displayed.

The present application claims priority on Japanese Patent Application (Japanese Patent Application No. 2019-55660) filed March 22, 2019, the entire contents of which are incorporated herein by reference.

## Claims

1. A tobacco product management system including an order terminal capable of displaying brand information of tobacco products of a plurality of brands and capable of receiving an operation for ordering a brand that a customer wishes to order from among the plurality of brands, and an assistant device that assists in picking up a tobacco product of a brand specified through an order operation received by the order terminal, the tobacco product management system comprising:
a display processing means for causing a display unit of the order terminal to present a display of first tobacco-product-related information, in addition to a brand operation display which enables the order operation or a designation operation for designating a brand of a tobacco product to be picked up from among the tobacco products of the plurality of brands;
an identifier acquiring means for acquiring a customer identifier for a customer; and
an information providing means for, in response to a specified operation being received by the order terminal on which the first tobacco-product-related information is being displayed, performing processing to enable a customer mobile terminal corresponding to the acquired customer identifier to acquire second tobacco-product-related information, wherein
the second tobacco-product-related information is information that is the same as or related to the first tobacco-product-related information or is related to a tobacco product of the brand specified through the order operation received by the order terminal.

2. The tobacco product management system according to Claim 1, wherein
the information providing means performs processing to enable the customer mobile terminal corresponding to the acquired customer identifier to acquire the second tobacco-product-related information after the order operation is received by the order terminal.

3. The tobacco product management system according to Claim 1 or 2, further comprising
a designation holding means for holding display designation information in association with the customer identifier for a customer, the display designation information being generated through an operation of the customer mobile terminal by the customer, wherein
in response to the customer identifier for a customer being acquired, the display processing means determines whether to display the first tobacco-product-related information on the display unit of the order terminal or determines content of the first tobacco-product-related information to be displayed on the display unit of the order terminal, based on the display designation information associated with the customer identifier.

4. The tobacco product management system according to any one of Claims 1 to 3, further comprising
a master information storage unit that stores tobacco-product-related master information, the tobacco-product-related master information including at least one of questionnaire information including a question for a customer, giveaway information indicating that a customer is granted a privilege, and campaign information indicating that a customer is able to be granted a privilege in accordance with a specific requirement, wherein
the display processing means selects at least one of the questionnaire information, the giveaway information, and the campaign information from within the tobacco-product-related master information as the first tobacco-product-related information to be displayed on the display unit of the order terminal.

5. The tobacco product management system according to any one of Claims 1 to 4, wherein
the display processing means switches, in accordance with whether the customer identifier has been acquired when questionnaire information including questions for a customer is displayed on the display unit of the order terminal as the first tobacco-product-related information, a pattern of the questions in the questionnaire information to be displayed.

6. The tobacco product management system according to any one of Claims 1 to 5, wherein
the display processing means causes the display unit of the order terminal to display the first tobacco-product-related information including information that promotes the specified operation, after the order operation is received by the order terminal.

7. The tobacco product management system according to Claim 4, further comprising
a generation means for generating application information indicating that a customer indicated by the acquired customer identifier has entered an application for a campaign that is able to grant a privilege to a customer in accordance with a specific requirement, wherein
the first tobacco-product-related information is the giveaway information or the campaign information, and
the generation means generates the application information of the customer in response to a specified operation being performed on the order terminal on which the first tobacco-product-related information is being displayed.

8. A tobacco product management method performed by a system, the system including an order terminal capable of displaying brand information of tobacco products of a plurality of brands and capable of receiving an operation for ordering a brand that a customer wishes to order from among the plurality of brands, and an assistant device that assists in picking up a tobacco product of a brand specified through an order operation received by the order terminal, the tobacco product management method comprising:
causing a display unit of the order terminal to present a display of first tobacco-product-related information, in addition to a brand operation display which enables the order operation or a designation operation for designating a brand of a tobacco product to be picked up from among the tobacco products of the plurality of brands;
acquiring a customer identifier for a customer; and
performing, in response to a specified operation being received by the order terminal on which the first tobacco-product-related information is being displayed, an information providing process to enable a customer mobile terminal corresponding to the acquired customer identifier to acquire second tobacco-product-related information, wherein
the second tobacco-product-related information is information that is the same as or related to the first tobacco-product-related information or is related to a tobacco product of the brand specified through the order operation received by the order terminal.

9. The tobacco product management method according to Claim 8, wherein
the information providing process is performed after an operation of designating a tobacco product of a target brand in response to the brand operation display is received by the order terminal.

10. The tobacco product management method according to Claim 8 or 9, further comprising
in response to the customer identifier for a customer being acquired, determining whether to display the first tobacco-product-related information on the display unit of the order terminal or determining content of the first tobacco-product-related information to be displayed on the display unit of the order terminal, based on display designation information associated with the customer identifier, wherein
the display designation information is generated through an operation of the customer mobile terminal by the customer, and is held in association with the customer identifier for the customer.

11. The tobacco product management method according to any one of Claims 8 to 10, further comprising
selecting, as the first tobacco-product-related information to be displayed on the display unit of the order terminal, at least one of questionnaire information, giveaway information, and campaign information from within tobacco-product-related master information, wherein
the tobacco-product-related master information is stored in a master information storage unit in such a manner that the tobacco-product-related master information includes at least one of questionnaire information, giveaway information, and campaign information,
the questionnaire information includes a question for a customer,
the giveaway information indicates that a customer is granted a privilege, and
the campaign information indicates that a customer is able to be granted a privilege in accordance with a specific requirement.

12. The tobacco product management method according to any one of Claims 8 to 11, further comprising
switching, in accordance with whether the customer identifier has been acquired when questionnaire information including questions for a customer is displayed on the display unit of the order terminal as the first tobacco-product-related information, a pattern of the questions in the questionnaire information to be displayed.

13. The tobacco product management method according to any one of Claims 8 to 12, wherein
the first tobacco-product-related information includes information that promotes the specified operation, and is displayed on the display unit of the order terminal after an operation of designating a tobacco product of a target brand in response to the brand operation display is received by the order terminal.

14. The tobacco product management method according to Claim 11, further comprising
generating application information indicating that a customer indicated by the acquired customer identifier has entered an application for a campaign that is able to grant a privilege to a customer in accordance with a specific requirement, wherein
the first tobacco-product-related information is the giveaway information or the campaign information, and
the application information is generated in response to a specified operation being performed on the order terminal on which the first tobacco-product-related information is being displayed.
